# EUROPÄISCHE PATENTSCHRIFT

(11) **EP 4 368 481 B1**
(45) Veröffentlichungstag und Bekanntmachung des Hinweises auf die Patenterteilung: **21.05.2025**
(21) Anmeldenummer: 23165258.7
(22) Anmeldetag: 29.03.2023
(51) Int. Cl.: B62D 55/065, B62D 55/116, E01C 21/00, E01C 23/088

(54) **BODENFRÄSMASCHINE, VERFAHREN ZUM FAHREN EINER BODENFRÄSMASCHINE UND VERFAHREN ZUM POSITIONIEREN EINER BODENFRÄSMASCHINE**
GROUND MILLING MACHINE, METHOD OF DRIVING A GROUND MILLING MACHINE AND METHOD OF POSITIONING A GROUND MILLING MACHINE
FRAISEUSE ROUTIÈRE, PROCÉDÉ DE CONDUITE D'UNE FRAISEUSE ROUTIÈRE ET PROCÉDÉ DE POSITIONNEMENT

(30) Priorität: 08.11.2022 DE 102022211804
(43) Veröffentlichungstag der Anmeldung: 15.05.2024
(73) Patentinhaber: BOMAG GmbH, 56154 Boppard (DE)
(72) Erfinder: PONSTEIN, Joachim, 56154 Boppard (DE)
(74) Vertreter: Zimmermann & Partner Patentanwälte mbB

(56) Entgegenhaltungen:
- EP-A2- 2 230 160
- DE-A1- 102016 008 998
- DE-U1- 29 924 566
- US-A1- 2016 040 372

## Beschreibung

Die Erfindung betrifft eine Bodenfräsmaschine, insbesondere eine Straßenfräse oder einen Stabilisierer oder einen Recycler, mit einem Maschinenrahmen und wenigstens einer in einer Maschinenlängsrichtung gesehen vorderen und wenigstens einer in der Maschinenlängsrichtung gesehen hinteren Fahreinrichtung. Darüber hinaus betrifft die Erfindung ein Verfahren zum Fahren einer Bodenfräsmaschine in Richtung bis zu 90° quer zu einer Maschinenlängsrichtung und ein Verfahren zum Positionieren einer Bodenfräsmaschine für Wartungsarbeiten und/oder zum Transport.

Gattungsgemäße Bodenfräsmaschinen werden insbesondere zum Straßen- und Wegebau, sowie beim Bau von Plätzen, Start- und Landebahnen eingesetzt. Bei ihnen handelt es sich typischerweise um selbstfahrende Baumaschinen, die einen von einem Fahrwerk getragenen Maschinenrahmen aufweisen. Darüber hinaus haben sie üblicherweise einen Fahrerstand, auf dem sich ein Bediener aufhalten kann und von dem aus der Bediener die Bodenfräsmaschine, beispielsweise über eine Steuereinrichtung, steuert. Als zentrale Arbeitseinrichtung einer Bodenfräsmaschine ist typischerweise eine Fräswalze vorgesehen. Bei dieser handelt es sich gewöhnlich um einen Hohlyzylinder, auf dessen Außenmantelfläche eine Vielzahl von Fräswerkzeugen, beispielsweise Fräsmeißeln, angeordnet ist. Die Fräswalze ist typischerweise um eine Rotationsachse rotierbar in einem Fräswalzenkasten gelagert. Der Fräswalzenkasten wiederum umgibt die Fräswalze haubenartig und ist nach unten, also zum Boden hin, geöffnet ausgebildet. Durch die Rotation der Fräswalze werden die Fräswerkzeuge in den Bodenuntergrund getrieben und fräsen diesen ab. Bei Straßenfräsen wird das abgefräste Fräsgut typischerweise aus dem Fräswalzenkasten entfernt und über eine Fördereinrichtung auf ein Transportfahrzeug überladen, welches das Fräsgut abtransportiert. Bei Stabilisierern und Recyclern wiederum steht eher eine Vermischung des Bodenuntergrundes im Vordergrund und das Fräsgut kann in der Regel hinter dem Fräswalzenkasten wieder auf dem Boden abgelegt werden bzw. auf diesem verbleiben. Bei Recyclern werden abgetragene Asphaltschichten zur Bereitstellung einer neuen Tragschicht wiederverwendet. Stabilisierer werden typischerweise dafür genutzt, einen Bodenuntergrund mit stabilisierenden Stoffen zu vermischen, die die Tragfähigkeit des Bodens erhöhen sollen.

Das Fahrwerk einer gattungsgemäßen Bodenfräsmaschine umfasst typischerweise Fahreinrichtungen, wobei die Fahreinrichtungen diejenigen Teile des Fahrwerkes sind, die, insbesondere im Fahrbetrieb der Bodenfräsmaschine, zumindest teilweise in direktem Bodenkontakt stehen. Typische Bodenfräsmaschinen weisen entweder drei oder vier Fahreinrichtungen auf, wobei grundsätzlich auch hiervon abweichende Anzahlen von Fahreinrichtungen denkbar sind. Die Fahreinrichtungen sind typischerweise als Kettenlaufwerke oder als Räder ausgebildet. So kann eine beziehungsweise jede Fahreinrichtung jeweils ein im Fahrbetrieb der Bodenfräsmaschine mit dem Bodenuntergrund in Kontakt stehendes Laufrad mit einer für den direkten Bodenkontakt ausgebildeten Lauffläche umfassen. Alternativ kann eine beziehungsweise jede Fahreinrichtung eine im Fahrbetrieb der Bodenfräsmaschine mit einem Bodenuntergrund in Kontakt stehende Gleiskette und ein zum Antrieb der Gleiskette ausgebildetes Antriebsrad umfassen. Die Gleiskette ist üblicherweise zum direkten Bodenkontakt ausgebildet. Hierbei sind typischerweise wenigstens in einer Maschinenlängsrichtung gesehen beziehungsweise in einer Maschinenlängsrichtung voreinander beabstandet zwei Fahreinrichtungen vorgesehen, die anhand des Aufbaus der Bodenfräsmaschine in eine vordere und eine hintere Fahreinrichtung unterteilbar sind. Die Maschinenlängsrichtung entspricht dabei der vorne-/hinten-Richtung der Bodenfräsmaschine. Die vordere und hintere Fahreinrichtung sind in Maschinenlängsrichtung getrennt voneinander angeordnet.

Die Fahreinrichtungen einer gattungsgemäßen Bodenfräsmaschine können zur Lenkung der Bodenfräsmaschine um eine Lenkachse rotierbar ausgebildet sein. Ergänzend oder alternativ können die Fahreinrichtungen über eine Hubeinrichtung entlang einer Hubachse in der Höhe verstellbar ausgebildet sein. Beides kann entweder sämtliche, einzelne oder mehrere der Fahreinrichtungen der Bodenfräsmaschine betreffen. Typischerweise sind wenigstens die in Vorwärtsrichtung vorderen und/oder hinteren Fahreinrichtungen, insbesondere alle der Fahreinrichtungen um jeweils eine Lenkachse zur Beeinflussung der Fahrrichtung der Bodenfräsmaschine lenkbar. Ferner können ergänzend oder alternativ die in Vorwärtsrichtung vorderen und/oder hinteren Fahreinrichtungen, insbesondere alle der Fahreinrichtungen, über jeweils eine geeignete Hubeinrichtung entlang einer zumindest teilweise in Vertikalrichtung verlaufenden Hubachse höhenverstellbar sein. Die Hubachse und/oder die Lenkachse verläuft typischerweise vertikal beziehungsweise im Wesentlichen vertikal. Mit anderen Worten verläuft die Hubachse und/oder die Lenkachse typischerweise senkrecht zu einem Bodenuntergrund, auf dem die Bodenfräsmaschine steht. Die Lenkachse bezeichnet diejenige Achse, um die sich die jeweilige Fahreinrichtung bei einer Lenkbewegung dreht bzw. in einer senkrecht zur Lenkachse verlaufenden, typischerweise horizontalen, Referenzebene den Drehpunkt. Eine typische Hubeinrichtung ist beispielsweise eine Hubsäule, über die die Fahreinrichtungen, beispielsweise das Kettenlaufwerk oder das Rad, mit dem Maschinenrahmen verbunden sind. Eine gattungsgemäße Straßenfräsmaschine und insbesondere eine gattungsgemäße Fahrwerkseinheit, die als Kettenlaufwerk mit einer Hubsäule ausgebildet ist, geht beispielsweise aus der EP 2 230 160 A2 hervor. Typischerweise sind die Fahreinrichtungen gattungsgemäßer Bodenfräsmaschinen über eine Lagereinrichtung am Maschinenrahmen beziehungsweise an der Hubeinrichtung angeordnet. Bei Kettenlaufwerken umfasst die Lagereinrichtung typischerweise eine Fahrwerkskonsole, die eine Verbindung zwischen der Hubeinrichtung und der Fahreinrichtung herstellt. Die Hubachse der jeweiligen Fahreinrichtung bezeichnet insbesondere diejenige Achse, entlang der die Fahreinrichtung bei einer Hubverstellung gegenüber dem Maschinenrahmen bewegt wird.

Ein besonderes Augenmerk liegt bei der Ausgestaltung gattungsgemäßer Bodenfräsmaschinen stets auf deren Manövrierbarkeit. Diese ist sowohl wichtig für den Arbeitsbetrieb, in dem möglichst genau geplanten Frässpuren gefolgt oder möglichst nah an einem Hindernis entlang gefräst werden muss, als auch für den Transportbetrieb, für den die Bodenfräsmaschine typischerweise möglichst platzsparend auf einem Transportfahrzeug untergebracht werden muss. Es ist daher beispielsweise bekannt, wenigstens eine Fahreinrichtung der Bodenfräsmaschine über einen Schwenkarm verschwenkbar auszubilden, sodass die Fahreinrichtung in unterschiedlichen Positionen eingesetzt werden kann, je nachdem, wie viel Platz zur Verfügung steht. Eine derartige Bodenfräsmaschine wird beispielsweise von der DE 299 24 566 1 gezeigt. Darüber hinaus ist es ebenfalls bekannt, die Fahreinrichtungen einer Bodenfräsmaschine derart auszubilden, dass sie um bis zu 90° zu einer Maschinenlängsrichtung verdreht werden können, so dass die Bodenfräsmaschine im Wesentlichen quer zu ihrer Maschinenlängsrichtung beziehungsweise vorne-/hinten-Richtung verfahren werden kann. Eine derartige Lösung wird in der US 2016/0040372 A1 gezeigt. Dieses System funktioniert allerdings nur, wenn die Fahreinrichtungen, beispielsweise Kettenlaufwerke, vergleichsweise klein beziehungsweise kurz sind. Typischerweise sind die Kettenlaufwerke oder Räder gattungsgemäßer Bodenfräsmaschinen allerdings so groß, dass sie bei einer Rotation bis zu 90° zu Maschinenlängsrichtung miteinander kollidieren würden. Dies liegt daran, dass typischerweise große Aufstandsflächen der Fahreinrichtungen angestrebt werden müssen, damit das hohe Gewicht der Bodenfräsmaschine nicht zu einem Einsinken der Bodenfräsmaschine im zu bearbeitenden Untergrund führt. Bei den meisten gattungsgemäßen Bodenfräsmaschinen ist daher ein ausreichend hoher Lenkeinschlag für eine Fahrbewegung senkrecht zur Maschinenlängsrichtung aufgrund der Ausdehnung der Fahreinrichtungen nicht möglich.

Vor diesem Hintergrund ist es die Aufgabe der vorliegenden Erfindung, die Manövrierbarkeit der Bodenfräsmaschine sowohl im Arbeitsbetrieb als auch für Transportzwecke weiter zu verbessern.

Die Lösung gelingt mit einer Bodenfräsmaschine und mit den Verfahren gemäß den unabhängigen Ansprüchen. Bevorzugte Weiterbildungen sind in den abhängigen Ansprüchen angegeben.

Konkret gelingt die Lösung bei einer eingangs genannten gattungsgemäßen Bodenfräsmaschine dadurch, dass die Lagereinrichtung derart ausgebildet ist, dass die Fahreinrichtung durch eine translatorische Bewegung wenigstens teilweise quer zur Hubachse und/oder Lenkachse bewegbar ist. Insbesondere ist die Fahreinrichtung durch die translatorische Bewegung ebenfalls gegenüber zumindest Teilen der Lagereinrichtung und/oder dem Maschinenrahmen der Bodenfräsmaschine bewegbar. Die translatorische Bewegung findet dabei bevorzugt quer beziehungsweise senkrecht beziehungsweise im Wesentlichen senkrecht zur Hubachse und/oder zur Lenkachse statt. Mit anderen Worten findet die translatorische Bewegung bevorzugt in einer Horizontalebene statt, beispielsweise in einer Ebene, die parallel zum Bodenuntergrund ausgerichtet ist, auf dem die Bodenfräsmaschine steht. Dabei kann es allerdings auch der Fall sein, dass die translatorische Bewegung nicht ausschließlich in einer Horizontalebene stattfindet, sondern ebenfalls eine vertikale Komponente aufweist. Wird die Trajektorie der Fahreinrichtung in eine horizontale Referenzebene projiziert, so verläuft die translatorische Bewegung dabei zumindest teilweise quer beziehungsweise senkrecht zur Hubachse und/oder Lenkachse. Die jeweilige Achse wird hierbei selbstverständlich nicht mit in die Referenzebene projiziert, sondern schneidet die Referenzebene, insbesondere im Wesentlichen senkrecht beziehungsweise senkrecht.

Erfindungsgemäß ist wenigstens eine der Fahreinrichtungen über eine Hubeinrichtung entlang einer Hubachse in der, insbesondere vertikalen, Höhe verstellbar und/oder zur Lenkung der Bodenfräsmaschine um eine Lenkachse rotierbar ausgebildet. Die Erfindung betrifft darüber hinaus die Lagereinrichtung genau dieser Fahreinrichtung. Es kann allerdings ebenfalls vorgesehen sein, dass mehrere Fahreinrichtungen jeweils auf diese Weise ausgebildet sind, beispielsweise sämtliche vorderen und/oder sämtliche hinteren Fahreinrichtungen der Bodenfräsmaschine. Bevorzugt sind sämtliche Fahreinrichtungen der Bodenfräsmaschine mit den hierin genannten Merkmalen versehen. Jede Fahreinrichtung kann dabei entweder nur eine Hubeinrichtung mit einer Hubachse aufweisen oder nur lenkbar ausgebildet sein, also eine Lenkachse aufweisen. Es kann allerdings genauso gut sein, dass eine Fahreinrichtung oder mehrere, bevorzugt alle, Fahreinrichtungen sowohl eine Hubeinrichtung mit einer Hubachse aufweisen als auch lenkbar ausgebildet sind, also ebenfalls eine Lenkachse aufweisen. Die Hubachse kann dabei koaxial mit der Lenkachse ausgebildet sein. Alternativ können die Hubachse und die Lenkachse separat voneinander angeordnet sein. Sie können parallel oder windschief zueinander angeordnet sein, einen Schnittpunkt aufweisen oder nicht.

Eine translatorische Bewegung beziehungsweise Translation ist eine Bewegung, bei der alle Punkte der Fahreinrichtung beziehungsweise sämtliche Bestandteile der Fahreinrichtung dieselbe Verschiebung erfahren. Zu einem gegebenen Zeitpunkt sind Geschwindigkeiten und Beschleunigungen aller Punkte beziehungsweise Bestandteile identisch, so dass sie sich auf parallelen Trajektorien bewegen. Davon zu unterscheiden ist eine rotatorische Bewegung beziehungsweise Rotation, bei der sich alle Punkte der Fahreinrichtung beziehungsweise sämtliche Bestandteile der Fahreinrichtung kreisförmig um eine gemeinsame Achse bewegen. Jede beliebige Bewegung eines, insbesondere starren, Körpers kann durch eine Überlagerung von Translations- und Rotationsbewegungen dargestellt werden. Auch die erfindungsgemäße translatorische Bewegung kann gleichzeitig mit einer rotatorischen Bewegung erfolgen. Wichtig ist lediglich, dass zumindest zusätzlich zu einer Rotation auch eine Translation stattfindet und sich die Fahreinrichtung beziehungsweise sämtliche Bestandteile der Fahreinrichtung durch diese translatorische Bewegung gegenüber und/oder relativ zu der Hubachse und/oder der Lenkachse bewegen. Bei einer translatorischen Bewegung der Gleiskette, beispielsweise, bewegt sich das obere Trum der Gleiskette mit derselben Geschwindigkeit und in dieselbe Richtung wie das untere Trum der Gleiskette. Bei einer Fahrbewegung der Bodenfräsmaschine auf der Gleiskette dagegen bewegt sich das obere Trum in eine entgegengesetzte Richtung wie das untere Trum, weshalb diese Bewegung nicht unter die erfindungsgemäße Definition fällt. Zwar bewegt sich die Gleiskette bei einer Fahrbewegung der Bodenfräsmaschine auch translatorisch mit der Bodenfräsmaschine mit, wird aber eben nicht gegenüber der Hubachse und/oder der Lenkachse bewegt. Eine translatorische Bewegung kann somit in einem Bewegungsschritt oder in mehreren Bewegungsschritten nacheinander erfolgen. Bei mehreren Bewegungsschritten sind zwischen diesen noch andere Bewegungen möglich. Werden mehrere Fahreinheiten translatorisch bewegt, können diese Bewegungen zeitgleich oder zeitversetzt und/oder mit gleichen oder verschiedenen Bewegungsgeschwindigkeiten durchgeführt werden.

Durch die erfindungsgemäße translatorische Bewegung ändert sich die Position der Fahreinrichtung gegenüber dem Maschinenrahmen beziehungsweise gegenüber der Anbindung der Fahreinrichtung an den Maschinenrahmen, beispielsweise über eine Hubsäule. Auf diese Weise lässt sich verändern, wie weit die Fahreinrichtung quer zur Hubachse und/oder quer zur Lenkachse und damit zur Anbindung an den Maschinenrahmen, beispielsweise über eine Hubsäule, übersteht. Auf diese Weise lassen sich die Fahreinrichtungen bewegen, während der Maschinenrahmen der Bodenfräsmaschine stillsteht, zumindest im Rahmen der Verstellgrenzen der Lagereinrichtung. Andersherum kann der Maschinenrahmen bewegt werden, ohne dass sich die Fahreinrichtungen fortbewegen. Es kann auf diese Weise somit die Relativlage der wenigstens einen Fahreinrichtung bis hin zu sämtlichen der Fahreinrichtungen relativ zur übrigen Maschine, insbesondere relativ zumindest zum Maschinenrahmen, verändert werden. Durch eine Verringerung des Überstandes der Fahreinrichtungen gegenüber der Anbindung an den Maschinenrahmen, beispielsweise der Hubsäule, kann eine Kollision der Fahreinrichtungen miteinander bei hohen Einschlagwinkeln vermieden werden. So können beispielsweise die Fahreinrichtungen nach einem üblichen Lenkeinschlag von der Maschinenmitte nach außen bewegt werden, sodass ihr Überstand über die Anbindung an den Maschinenrahmen nach außen deutlich größer ist als zur Maschinenmitte hin. Auf diese Weise wird im Bereich der Maschinenmitte weniger Platz benötigt und eine Kollision der Fahreinrichtungen miteinander vermieden. Es können dann Einschlagwinkel bis zu 90° zur Maschinenlängsrichtung beziehungsweise vorne-/hinten-Richtung der Bodenfräsmaschine erreicht werden. Es ist dann also möglich, auch bei einer Bodenfräsmaschine mit großen Fahreinrichtungen und großen Bodenkontaktflächen der Kettenlaufwerke beziehungsweise Räder, einen Lenkwinkel von 90° einzuschlagen und die Bodenfräsmaschine senkrecht zur Maschinenlängsrichtung zu bewegen. Durch die entsprechende Bewegbarkeit der Fahreinrichtungen kann auch der Platzbedarf der Bodenfräsmaschine auf einem Transportfahrzeug optimiert werden. Beispielsweise kann der Maschinenrahmen beziehungsweise der Körper der Bodenfräsmaschine durch die translatorische Bewegung der Fahreinrichtungen noch weiter bewegt werden, wenn die Fahreinrichtungen bereits an einem niedrigen Hindernis, beispielsweise einer Schwelle oder dergleichen, anstoßen. Darüber hinaus werden auch Wartungsarbeiten an der Bodenfräsmaschine erleichtert. So kann durch die translatorische Bewegung der Fahreinrichtungen mehr Platz vor und/oder hinter dem Fräswalzenkasten bereitgestellt werden, beispielsweise um eine Wartung der Fräswalze oder einer an den Fräswalzenkasten angeschlossenen Fördereinrichtung durchzuführen. Hierfür werden die Fahreinrichtungen, beispielsweise bei einer Lenkstellung in Geradeausbeziehungsweise Maschinenlängsrichtung, durch die erfindungsgemäße translatorische Bewegung vom Fräswalzenkasten weg bewegt. Auf diese Weise wird im Arbeitsbereich um den Fräswalzenkasten herum mehr Platz frei, in dem sich Wartungspersonal aufhalten kann. Ergänzend oder alternativ kann auf dieser Weise auch die Spurbreite der Fahreinrichtungen zueinander bzw. der Bodenfräsmaschine bezüglich einer Fahrrichtung, beispielsweise einer Vorwärtsrichtung, verändert werden. Dies kann dann vorteilhaft sein, wenn die Bodenfräsmaschine entlang einer Randstruktur, wie beispielsweise einem Randstein, fräst und sichergestellt werden soll, dass die Fahrspur der Bodenfräsmaschine vollständig auf dem Randstein oder vollständig neben dem Randstein verläuft. Auch ist es möglich, dass die einzelnen Fahreinrichtungen derart positioniert werden, dass sämtliche ihrer einzelnen Fahrspuren zueinander überlappungsfrei sind.

Umfasst die Fahreinrichtung ein Kettenlaufwerk, so weist sie mindestens eine Gleiskette und ein Antriebsrad auf, wobei das Antriebsrad zum Antrieb der Gleiskette ausgebildet ist. Dazu ist das Antriebsrad bevorzugt um eine Antriebsradachse rotierbar ausgebildet. Umfasst die Fahreinrichtung dagegen ein zum direkten Bodenkontakt ausgebildetes Laufrad, so ist das Laufrad bevorzugt um eine Laufradachse rotierbar ausgebildet. Typischerweise wird die Rotation des Antriebsrades um die Antriebsradachse beziehungsweise die Rotation des Laufrades um die Laufradachse von einem Hydraulikmotor angetrieben. Alternativ könnte allerdings ebenfalls ein Elektromotor oder eine mechanische Verbindung zu einem Verbrennungsmotor herangezogen werden. Darüber hinaus kann es bevorzugt vorgesehen sein, dass die Lagereinrichtung derart ausgebildet ist, dass die Fahreinrichtung um eine Pendelachse kippbar ausgebildet ist. Durch die Kipp- beziehungsweise Pendelbewegung der Fahreinrichtung um die Pendelachse wird beispielsweise das Überfahren von Kanten oder anderen Unebenheiten des Bodens erleichtert. Die Antriebsradachse und/oder die Laufradachse und/oder die Pendelachse sind dabei bevorzugt im Wesentlichen senkrecht beziehungsweise senkrecht zur Hubachse und/oder Lenkachse und in einer Geradeausstellung der Fahreinrichtungen insbesondere auch senkrecht zur Maschinenlängsrichtung ausgebildet beziehungsweise angeordnet. Besonders bevorzugt ist es nun vorgesehen, dass die Lagereinrichtung derart ausgebildet ist, dass der Abstand der Antriebsradachse oder der Laufradachse und/oder der Pendelachse gegenüber der Hubachse und/oder der Lenkachse verstellbar ist. Sowohl die Hubachse, die Lenkachse, die Antriebsradachse, die Laufradachse und die Pendelachse beschreiben vorliegend keine physischen Bauteile sondern lediglich virtuelle Achsen, beispielsweise Geraden im Raum, die als Referenz für die jeweils beschriebene Bewegung dienen. Der Abstand zwischen zwei Achsen beschreibt vorliegend den kürzesten Abstand der Achsen zueinander. Er wird beispielsweise durch eine Verbindungslinie zwischen zwei Punkten der Achsen definiert, wobei die Verbindungslinie auf beiden Achsen senkrecht steht. Der Abstand koaxialer oder sich schneidender Achsen ist dabei null. Die Verstellung des Abstandes der Antriebsradachse oder der Laufradachse und/oder der Pendelachse gegenüber der Hubachse und/oder der Lenkachse erfolgt durch die erfindungsgemäße translatorische Bewegung. Weist eine Fahreinrichtung sowohl eine Pendelachse als auch eine Antriebsradachse oder eine Laufradachse auf, so wird der Abstand dieser Achsen zur Hubachse und/oder zur Lenkachse um denselben Betrag verändert. Diese entsprechende Abstandsänderung ist daher ebenfalls eine Möglichkeit, die erfindungsgemäße translatorische Bewegung zu definieren.

In dem Fall, dass die Fahreinrichtung ein Kettenlaufwerk ist, können noch weitere Achsen zur Beschreibung der translatorischen Bewegung herangezogen werden. So ist es beispielsweise bevorzugt vorgesehen, dass die Fahreinrichtung zusätzlich zur Gleiskette und zum Antriebsrad wenigstens ein Leitrad und insbesondere wenigstens einen Laufrolle umfasst. Das Leitrad ist typischerweise dem Antriebsrad gegenüber an dem Kettenlaufwerk angeordnet und kann ebenfalls zur Regulierung der Kettenspannung ausgebildet sein, beispielsweise über eine Kettenspanneinrichtung. Eine oder mehrere Laufrollen wiederum stützen die Gleiskette auf deren Unterseite, also der Bodenkontaktseite, ab. Sie können beispielsweise gefedert ausgebildet sein. Das Leitrad ist bevorzugt um eine Leitradachse und die Laufrolle insbesondere um eine Laufrollenachse rotierbar ausgebildet. Besonders bevorzugt ist dann vorgesehen, dass die Lagereinrichtung derart ausgebildet ist, dass der Abstand der Leitradachse und insbesondere auch der Laufrollenachse gegenüber der Hubachse und/oder der Lenkachse verstellbar ist. Dies erfolgt ebenfalls durch die erfindungsgemäße translatorische Bewegung der Fahreinrichtung. Der Abstand sämtlicher Achsen zur Hubachse und/oder zur Lenkachse wird hierbei ebenfalls um denselben Betrag verändert. Je nach Lage der Achsen zueinander kann der Abstand vergrößert oder verkleinert werden oder, bei einer symmetrischen Bewegung um die Hubachse und/oder die Lenkachse herum, sogar gleich bleiben. Die Teilstrecken einer Annäherung und nachfolgender Beabstandung von der Hubachse und/oder der Lenkachse werden jeweils betragsmäßig addiert, sodass auch in diesem Fall der Betrag der Abstandsänderung bei allen Achsen gleich ist. Wichtig ist, dass die Antriebsradachse, die Leitradachse, die Laufrollenachse und gegebenenfalls die Pendelachse beziehungsweise die Laufradachse durch die translatorische Bewegung um denselben Betrag in dieselbe Richtung bewegen. Auch hierdurch unterscheidet sich die erfindungsgemäße translatorische Bewegung von konventionellen Rotationen der Fahreinrichtung beim Lenken oder von konventionellen Schwenkbewegungen der Fahreinrichtung.

Die Fahreinrichtung, sei es ein Rad oder eine Gleiskette, weist eine aktuelle Laufrichtung auf, die durch ein Abrollen auf dem Bodenuntergrund definiert ist. Die Lagereinrichtung kann nun derart ausgebildet sein, dass sie eine translatorische Verstellung der Fahreinrichtung gegenüber der Hub- und/oder Lenkachse in und entgegen dieser Laufrichtung ermöglicht. Eine solche Verstellung kann daher auch insbesondere durch einen Fahrantrieb dieser Fahreinrichtung und/oder durch einen Fahrantrieb einer oder mehrerer der anderen Fahreinrichtungen erfolgen. Ergänzend oder alternativ kann es aber auch vorgesehen sein, dass die Lagereinrichtung derart ausgebildet ist, dass sie eine translatorischen Verstellung quer und insbesondere senkrecht zur Laufrichtung der Fahreinrichtung ermöglicht. In diesem Fall ist es bevorzugt, wenn die Fahreinrichtung gegenüber dem Bodenuntergrund angehoben oder zumindest entlastet ist, um dieser Art der Verstellung zu erleichtern. Wie vorstehend bereits erwähnt, erfolgt die translatorische Verstellung grundsätzlich wenigstens teilweise in einer Horizontalebene bzw. mit anderen Worten: Bei einer Projektion der Verstellbewegung in eine virtuelle horizontale Referenzebene erfolgt stets eine Veränderung der Position der jeweiligen Fahreinrichtung relativ zum Maschinenrahmen und/oder zur Fräswalze, wenn die Position der Fahreinrichtung vor der translatorischen Verstellung mit der Position der Fahreinrichtung nach der translatorischen Verstellung verglichen wird. Diese Art der Ausrichtung der Verstellrichtung ermöglicht es insbesondere, die Spurbreite der Bodenfräsmaschine zu variieren.

Zur konkreten Ausgestaltung der Lagereinrichtung sind verschiedene Lösungen denkbar. Beispielsweise kann die Lagereinrichtung zweiteilig ausgebildet sein, aber auch drei- oder mehrteilige Ausbildungen sind denkbar. Bevorzugt ist es, dass die Lagereinrichtung eine an der Hubeinrichtung oder dem Maschinenrahmen befestigte Fahrwerkskonsole und einen an der Fahreinrichtung befestigten Fahrwerksträger aufweist, wobei die Fahrwerkskonsole und der Fahrwerksträger, insbesondere direkt, derart beweglich aneinander gelagert sind, dass sie gegeneinander translatorisch, insbesondere linear, verstellbar sind. Die entsprechende Verstellung wird von der erfindungsgemäßen translatorischen Bewegung bewerkstelligt. Insbesondere wird der Fahrwerksträger mit der Fahreinrichtung mitbewegt, während die Fahrwerkskonsole gegenüber dem Maschinenrahmen und der Hubachse und/oder der Lenkachse feststeht. Die Befestigung des Fahrwerksträgers an der Fahreinrichtung wiederum kann ebenfalls beweglich sein, so dass der Fahrwerksträger beispielsweise die vorstehend bereits erwähnte Pendelachse für die Fahreinrichtung bereitstellt beziehungsweise definiert. Hierfür weist der Fahrwerksträger beispielsweise ein Pendelgelenk auf, über das der Fahrwerksträger mit der Fahreinrichtung verbunden ist.

Eine mögliche und bevorzugte Ausgestaltung der Lagereinrichtung sieht vor, dass diese wenigstens eine Führungsschiene umfasst. Die Fahrwerkskonsole und der Fahrwerksträger sind dann bevorzugt formschlüssig zueinander über die Führungsschiene verbunden, derart, dass Fahrwerkskonsole und der Fahrwerksträger entlang der Führungsschiene relativ zueinander bewegbar sind. Die formschlüssige Verbindung zwischen der Fahrwerkskonsole und dem Fahrwerksträger ist also bevorzugt derart ausgebildet, dass sie eine Bewegung entlang der Führungsschiene zulässt, allerdings quer zur Führungsschiene verhindert. Beispielsweise kann die Führungsschiene an der Fahrwerkskonsole angeordnet sein und der Fahrwerksträger ein Führungselement aufweisen, wobei das Führungselement in die Führungsschiene ein- oder diese umgreift. Die Anordnung kann allerdings selbstverständlich auch andersherum sein, so dass die Führungsschiene am Fahrwerksträger und das Führungselement an der Fahrwerkskonsole angeordnet sind. Das Führungselement ist bevorzugt mit wenigstens einer Rolle, einem Wälz- oder einem Gleitlager ausgestattet, um die Reibung zwischen dem Führungselement, und damit beispielsweise dem Fahrwerksträger, und der Führungsschiene, und damit beispielsweise der Fahrwerkskonsole, zu verringern. Ist der Fahrwerksträger zwei- oder mehrteilig ausgebildet, so ist bevorzugt jeder Teil des Fahrwerksträgers mit einem entsprechenden Führungselement ausgestattet.

Die Lagereinrichtung kann allerdings auch anders ausgestaltet sein. Beispielsweise kann die Lagereinrichtung ergänzend oder alternativ zur Führungsschiene einen Schwenkarm aufweisen. Insbesondere kann die Fahrwerkskonsole über den Schwenkarm mit dem oder den Fahrwerksträger(n) verbunden sein, wobei der Schwenkarm derart ausgebildet und gelagert ist, dass er die translatorische Bewegung der Fahreinrichtung bewerkstelligen kann. Auch hier werden bevorzugt der oder die Fahrwerksträger mit der Fahreinrichtung gegenüber der Fahrwerkskonsole bewegt, beispielsweise verschwenkt. Die Verschwenkbewegung durch den Schwenkarm kann dabei linear oder bogenförmig sein. Sie kann ebenfalls eine Rotationsbewegung der Fahreinrichtung mit umfassen. Wichtig ist lediglich, wie bereits erwähnt, dass die translatorische Bewegung ebenfalls im Bewegungsablauf der Verschwenkung enthalten ist.

In einer weiteren Ausgestaltung der Lagereinrichtung kann diese ergänzend oder alternativ zu den bisher beschriebenen Möglichkeiten ebenfalls eine Führungseinrichtung, beispielsweise eine Kulissenführung, aufweisen. Beispielsweise umfasst die Fahrwerkskonsole eine Kulissenführung und der oder die Fahrwerksträger wenigstens einen Kulissenstein, der in der Kulissenführung beweglich gelagert ist und eine von der Kulissenführung vorgegebene Bewegung durchführen kann. Alternativ kann auch hier die Anordnung andersherum ausgebildet sein, mit der Kulissenführung am Fahrwerksträger und dem wenigstens einen Kulissenstein an der Fahrwerkskonsole. Die Kulissenführung ist beispielsweise als Langloch ausgebildet, in der der Kulissenstein über ein Gleit- oder Wälzlager gelagert ist. Die Form der Kulissenführung gibt dabei die Bewegung beziehungsweise die Trajektorie des Kulissensteines und damit des Fahrwerkträgers beziehungsweise der Fahreinrichtung vor. Auch hier kann die Kulissenführung beispielsweise eine lineare oder eine zumindest teilweise bogenförmige Bewegung vorgeben, solange die translatorische Bewegung der Fahreinrichtung mit umfasst ist.

Um einen sicheren Arbeitsbetrieb der Bodenfräsmaschine zu garantieren, ist es bevorzugt vorgesehen, dass die Lagereinrichtung eine Feststelleinrichtung umfasst. Die Feststelleinrichtung ist insbesondere zwischen einer Sperrposition und einer Freigabeposition verstellbar ausgebildet, wobei die Feststelleinrichtung in der Sperrposition eine translatorische Bewegung der Fahreinrichtung gegenüber der Hubachse und/oder der Lenkachse verhindert und in der Freigabeposition freigibt. Die Feststelleinrichtung kann beispielsweise einen Bolzen, einen Riegel, einen Haken oder dergleichen umfassen. Sie kann beispielsweise derart ausgebildet sein, dass sie eine Bewegung des oder der Fahrwerksträger(s) gegenüber der Fahrwerkskonsole verhindert oder freigibt. Die Verstellung der Feststelleinrichtung zwischen der Sperrposition und der Freigabeposition kann dabei manuell oder automatisch, beispielsweise gesteuert von einer nachstehend noch näher erläuterten Steuereinrichtung, erfolgen. Für den Fall einer automatischen Steuerung der Feststelleinrichtung umfasst diese ebenfalls einen Aktor, der die Feststelleinrichtung zwischen der Sperrposition und der Freigabeposition bewegt. Der Aktor kann beispielsweise einen Linearantrieb, insbesondere einen Hydraulikzylinder, oder einen Elektromagneten umfassen.

Die translatorische Bewegung der Fahreinrichtung kann grundsätzlich auf verschiedene Arten bewerkstelligt werden. So ist es beispielsweise möglich, dass die translatorische Bewegung durch eine Fahrbewegung der Bodenfräsmaschine beziehungsweise der translatorisch zu bewegenden Fahreinrichtung selbst oder der anderen Fahreinrichtungen der Bodenfräsmaschine angetrieben wird. Beispielsweise kann eine gegebenenfalls vorhandene Feststelleinrichtung an der Fahreinrichtung gelöst werden, so dass die Fahreinrichtung dann grundsätzlich derart beweglich gelagert ist, dass sie die translatorische Bewegung relativ zur übrigen Maschine ausführen kann. Wird dann die Bodenfräsmaschine relativ zur jeweiligen Fahreinrichtung in Richtung der translatorischen Bewegung bewegt, so verbleibt die Fahreinrichtung beispielsweise aufgrund ihrer Trägheit und ihres Eigengewichtes an ihrer ursprünglichen Position, wodurch es zur translatorischen Bewegung kommt. Ebenfalls möglich wäre es, dass die Bodenfräsmaschine stillsteht, beispielsweise gehalten durch in diesem Moment feststehende andere Fahreinrichtungen, während die zu verstellende Fahreinrichtung angetrieben wird, insbesondere analog dazu, wie sie im Fahrbetrieb der Bodenfräsmaschine angetrieben wird. Durch den Fahrantrieb der Fahreinrichtung bewegt sich diese dann als Ganzes bzw. als Funktionseinheit gegenüber dem Rest der Bodenfräsmaschine, der aufgrund seines Eigengewichtes und seiner Trägheit, insbesondere bei gelöster Feststelleinrichtung, nicht mit der Fahreinrichtung mitbewegt wird. Auf diese Weise wird die translatorische Bewegung der Fahreinrichtung bewerkstelligt. Alles in allem ist die translatorische Bewegung der Fahreinrichtung also anhand der Relativbewegung der Fahreinrichtung gegenüber der Hubachse und/oder der Lenkachse definiert. Sie benötigt dagegen keine Bewegung der Fahreinrichtung gegenüber der Standfläche der Bodenfräsmaschine oder der Außenumgebung, wobei dies auch möglich ist. Die Standfläche der Bodenfräsmaschine bezeichnet vorliegend eine Bodenfläche, die durch die im Bodenkontakt befindlichen Außenoberflächen aller Fahreinrichtungen der Bodenfräsmaschine definiert ist, derart, dass diese insgesamt ein Rechteck darstellt, dessen Seitenkanten parallel zur Längserstreckungsachse der Bodenfräsmaschine verlaufen. Der Umfang des Rechtecks ist dadurch festgelegt, dass er den jeweils kleinsten Umfang darstellt, der erforderlich ist, dass alles der vorhandenen Fahreinrichtungen mit ihren im Bodenkontakt befindlichen Außenoberflächen gerade noch innerhalb dieses Umfangs liegen. Die von diesem Umfang umschlossene Fläche bezeichnet die Standfläche der Bodenfräsmaschine.

Es kann in einer ersten Ausführungsform vorgesehen sein, dass keine zusätzliche Antriebseinrichtung für die translatorische Bewegung der Fahreinrichtung vorhanden ist. Insbesondere weist die Bodenfräsmaschine in diesem Fall keine Antriebseinrichtung auf, die ausschließlich die translatorische Bewegung der Fahreinrichtung antreibt. Alternativ kann es vorgesehen sein, dass die Lagereinrichtung eine Antriebseinrichtung, insbesondere einen Hydraulikzylinder, umfasst, die die translatorische Bewegung der Fahreinrichtung gegenüber der Hubachse und/oder der Lenkachse antreibt. Die Antriebseinrichtung umfasst bevorzugt einen Linearantrieb wie einen Hydraulikzylinder oder einen Zahnstangenantrieb, der beispielsweise von einem Hydraulikmotor oder einem Elektromotor angetrieben werden kann. Die Antriebseinrichtung ist bevorzugt derart ausgebildet, dass sie eine translatorische Bewegung der Fahreinrichtung gegenüber der Hubachse und/oder der Lenkachse in einer oder bevorzugt zwei, insbesondere entgegengesetzte, Richtungen ermöglicht. Steht die Fahreinrichtung also beispielsweise in Geradeausstellung, so kann die Antriebseinrichtung bevorzugt eine translatorische Bewegung der Fahreinrichtung in oder entgegen der Maschinenlängsrichtung antreiben. Auch die Lagereinrichtung ist in diesem Fall bevorzugt entsprechend ausgebildet. Darüber hinaus ist bevorzugt vorgesehen, dass die Antriebseinrichtung von einer Steuereinrichtung gesteuert wird, entweder automatisch oder auf einen Steuerbefehl eines Bedieners hin.

Grundsätzlich reicht es aus, wenn die Lagereinrichtung derart ausgebildet ist, dass die Fahreinrichtung durch die translatorische Bewegung zwischen einer Ausgangsposition und einer, bevorzugt zwei, insbesondere einander gegenüberliegenden, Endposition(en) verstellbar ist. In einer bevorzugten Ausführungsform ist beispielsweise vorgesehen, dass die Lagereinrichtung mindestens einen Anschlag umfasst, der eine Endposition für die translatorische Bewegung der Fahreinrichtung gegenüber der Hubachse und/oder der Lenkachse vorgibt, wobei bevorzugt wenigstens zwei Anschläge vorhanden sind, die an der Lagereinrichtung zwei einander gegenüberliegende Endpositionen vorgeben. Bevorzugt ist die Lagereinrichtung derart ausgebildet, dass die translatorische Bewegung der Fahreinrichtung im Rahmen der baulichen Möglichkeiten der Lagereinrichtung über eine beliebige Strecke hinweg erfolgen kann. Mit anderen Worten ist es bevorzugt, dass die Lagereinrichtung durch die translatorische Bewegung in beliebige Positionen zwischen der Ausgangsposition und der beziehungsweise den Endposition(en) verstellbar ist. Darüber hinaus ist bevorzugt, dass die Fahreinrichtung auch in diesen beliebigen Positionen von der Feststelleinrichtung feststellbar ist.

Um eine Rückmeldung über die aktuelle Stellung beziehungsweise Position der Fahreinrichtung zu erhalten, ist bevorzugt ein Positionssensor und/oder eine Kamera vorgesehen, der und/oder die eine Position der Fahreinrichtung gegenüber der Hubsäule und/oder gegenüber der Lenkachse und/oder gegenüber der Lagereinrichtung bestimmt und diese insbesondere an eine Steuereinrichtung weiterleitet. Ein "Bestimmen" der Position umfasst vorliegend also ebenfalls bevorzugt auch eine bildliche Erfassung der Position der Fahreinrichtung über eine Kamera. Der Positionssensor kann beispielsweise als Kontaktsensor ausgebildet sein, so dass verschiedene Stellungen der Fahreinrichtung entlang der von der Lagereinrichtung vorgegebenen Verstellbewegung erfassbar sind. Beispielsweise können Kontaktsensoren in der oder den Endposition(en) und/oder in der Ausgangsposition der Fahreinrichtung vorgesehen sein. Es kann auch ein kontaktlos detektierender Sensor verwendet werden, beispielsweise ein induktiver Näherungsschalter und/oder eine geeignete Bildverarbeitungssoftware und eine Kamera. Darüber hinaus kann es sich bei dem Positionssensor auch um einen Sensor handeln, der die Stellung der Antriebseinrichtung bezüglich der translatorischen Bewegung der Fahreinrichtung detektiert, insbesondere kontinuierlich. Dies kann beispielsweise ein Seilzugsensor oder dergleichen sein.

Ganz grundsätzlich reicht es zum Erreichen erfindungsgemäßer Vorteile aus, wenn nur eine Fahreinrichtung über eine erfindungsgemäße Lagereinrichtung an der Bodenfräsmaschine gelagert ist und dadurch die erfindungsgemäße translatorische Bewegung durchführen kann. Allein durch die translatorische Bewegung dieser einen Fahreinrichtung kann beispielsweise bereits der zur Verfügung stehende Raum vor oder hinter dem Fräswalzenkasten vergrößert werden, zumindest an einer Seite der Maschine, die als Wartungszugang genutzt werden kann. Darüber hinaus kann die Standfläche der Bodenfräsmaschine verändert werden, um beispielsweise einen leichteren Transport zu ermöglichen. Gattungsgemäße Bodenfräsmaschinen verfügen typischerweise über wenigstens drei und insbesondere vier Fahreinrichtungen. Es ist daher auch bevorzugt, dass wenigstens zwei oder besonders bevorzugt wenigstens drei oder ganz besonders bevorzugt sämtliche Fahreinrichtungen der Bodenfräsmaschine über eine erfindungsgemäße Lagereinrichtung an der Bodenfräsmaschine gelagert sind und dadurch die erfindungsgemäße translatorische Bewegung durchführen können. Für alle diese Fahreinrichtungen gelten daher bevorzugt die hierin beschriebenen Merkmale, Wirkungen und Vorteile sämtlicher beschriebener Weiterbildungen. Eine besonders bevorzugte Ausführungsform sieht vor, dass zumindest sämtliche vorderen und/oder sämtliche hinteren Fahreinrichtungen eine erfindungsgemäße translatorische Bewegung ausführen können. So ist es bevorzugt vorgesehen, dass zwei vordere und/oder zwei hintere Fahreinrichtungen vorhanden sind. Die beiden vorderen und/oder die beiden hinteren Fahreinrichtungen umfassen bevorzugt jeweils eine Hubeinrichtung mit einer Hubachse und/oder eine Lenkachse sowie eine Lagereinrichtung. Sie sind also insbesondere um die Lenkachse lenkbar ausgebildet. Die Lagereinrichtung ist bevorzugt derart ausgebildet, dass die jeweilige Fahreinrichtung durch eine translatorische Bewegung gegenüber der jeweiligen Hubachse und/oder Lenkachse bewegbar ist. Auf diese Weise können die vorderen Fahreinrichtungen und/oder die hinteren Fahreinrichtungen jeweils in dieselbe Richtung translatorisch bewegt werden. Auf diese Weise lässt sich, sofern die translatorische Verstellung nicht ausschließlich gradlinig, gleichgerichtet und von Umfang her identisch ist, beispielsweise auch die Standfläche der Bodenfräsmaschine verändern, beispielsweise vergrößern oder verkleinern. Hierzu können beispielsweise die jeweiligen vorderen oder hinteren Fahreinrichtungen beide in dieselbe Richtung in Maschinenlängsrichtung zur Maschinenmitte hin verstellt werden und/oder beispielsweise die vorderen und die hinteren Fahreinrichtungen aufeinander zu oder in entgegengesetzte Richtungen verstellt werden. Auch der zur Verfügung stehende Freiraum vor beziehungsweise hinter dem Fräswalzenkasten für Wartungsarbeiten lässt sich durch diese Ausbildung merklich und beidseitig vergrößern.

Bei der Steuereinrichtung handelt es sich insbesondere um eine elektronische Steuereinrichtung, beispielsweise um einen Computer. Die Steuereinrichtung kann Teil des Bordcomputers der Bodenfräsmaschine sein. Beispielsweise ist die Steuereinrichtung der Bordcomputer der Bodenfräsmaschine. Die Steuereinrichtung ist dazu ausgebildet, Steuerbefehle eines Bedieners aufzunehmen und Aktuatoren der Bodenfräsmaschine anzusteuern, um die Steuerbefehle umzusetzen. So ist die Steuereinrichtung beispielsweise dazu ausgebildet, entweder automatisch oder in Reaktion auf einen Steuerbefehl eines Bedieners, die Antriebseinrichtung für die translatorische Bewegung der Fahreinrichtung zu steuern. Insbesondere kann die Steuereinrichtung auch zur Steuerung der Feststelleinrichtung ausgebildet sein. Die Steuereinrichtung ist bevorzugt also zur Steuerung des Aktors der Feststelleinrichtung ausgebildet. Gleichzeitig erhält die Steuereinrichtung Signale von Sensoren der Bodenfräsmaschine, beispielsweise dem Positionssensor und/oder der Kamera. Bevorzugt umfasst die Steuereinrichtung eine Anzeigeeinrichtung, beispielsweise einen Bildschirm oder ein Display. Die Steuereinrichtung kann dazu ausgebildet sein, das Signal des Positionssensors und/oder das Bild der Kamera auf der Anzeigeeinrichtung für einen Bediener anzuzeigen. Auf diese Weise wird der Bediener über die aktuelle Stellung der Fahreinrichtung informiert. Darüber hinaus ist die Steuereinrichtung bevorzugt dazu ausgebildet, auf der Anzeigeeinrichtungen anzuzeigen, ob sich die Feststelleinrichtung in der Sperrposition oder in der Freigabeposition befindet. Die Steuereinrichtung ist ebenfalls bevorzugt dazu ausgebildet, die translatorische Bewegung mehrerer Fahreinrichtungen der Bodenfräsmaschine untereinander zu koordinieren. So kann der Bediener beispielsweise einen einzigen Steuerbefehl an der Steuereinrichtung eingeben, der signalisiert, dass er die Bodenfräsmaschine quer zur Maschinenlängsrichtung verfahren möchte. Die Steuereinrichtung übernimmt dann die vorstehend beschriebene Bewegung der Fahreinrichtungen, die zum einen translatorisch bewegt und zum anderen um bis zu 90° zur Maschinenlängsrichtung eingeschlagen werden müssen. Ein anderes Beispiel ist, dass der Bediener an der Steuereinrichtung einen Steuerbefehl eingibt, der signalisiert, dass die Standfläche der Bodenfräsmaschine verkleinert werden soll. In diesem Fall koordiniert die Steuereinrichtung dann eine translatorische Bewegung zumindest eines Teils der Fahreinrichtungen beispielsweise in Maschinenlängsrichtung, und zwar bevorzugt derart, dass die vorderen Fahreinrichtungen in Maschinenlängsrichtung nach hinten und/oder die hinteren Fahreinrichtungen in Maschinenlängsrichtung nach vorne bewegt werden, wodurch der Abstand der vorderen und der hinteren Fahreinrichtungen zueinander und damit auch die Standfläche der Bodenfräsmaschine verändert wird. Schließlich kann der Bediener an der Steuereinrichtung auch einen Steuerbefehl eingeben, der signalisiert, dass mehr Freiraum vor und/oder hinter dem Fräswalzenkasten notwendig ist, beispielsweise für Wartungsarbeiten. In diesem Fall koordiniert die Steuereinrichtung dann die translatorische Bewegung der vorderen und/oder hinteren Fahreinrichtungen in Maschinenlängsrichtung nach vorne und/oder nach hinten, so dass vor und/oder hinter dem Fräswalzenkasten mehr Platz freigegeben wird. Um die jeweilige Funktion zu erreichen, muss der Bediener nur einen einzigen, das jeweilige Ziel repräsentierenden Steuerbefehl an der Steuereinrichtung eingeben, woraufhin die Steuereinrichtung den weiteren Ablauf und die Umsetzung des Steuerbefehls selbsttätig durchführt.

Die Lösung der eingangs genannten Aufgabe gelingt ebenfalls mit den nachstehend beschriebenen, erfindungsgemäßen Verfahren. Die erfindungsgemäßen Verfahren machen sich dabei eine translatorische Bewegung einer Fahreinrichtung, wodurch diese gegenüber der Hubachse und/oder der Lenkachse bewegt wird, zu Nutze, wie sie vorstehend bereits beschrieben ist. Insbesondere beziehen sich die erfindungsgemäßen Verfahren jeweils auf eine erfindungsgemäße Bodenfräsmaschine beziehungsweise werden an einer derartigen Bodenfräsmaschine durchgeführt. Sämtliche hierin beschriebenen Merkmale, Wirkungen und Vorteile der erfindungsgemäßen Bodenfräsmaschine gelten daher im übertragenen Sinne genauso für die erfindungsgemäßen Verfahren und umgekehrt. Es wird lediglich zur Vermeidung von Wiederholungen auf die jeweils anderen Ausführungen Bezug genommen.

Beispielsweise betrifft die Erfindung ein Verfahren zum Fahren einer Bodenfräsmaschine, insbesondere einer Straßenfräse oder eines Stabilisierers oder eines Recyclers, in Richtung bis zu 90° quer zu einer Maschinenlängsrichtung. Die Bodenfräsmaschine ist dabei bevorzugt gemäß den vorstehenden Ausführungen ausgebildet. Sie weist wenigstens eine um eine Lenkachse drehbar am Maschinenrahmen gelagerte Fahreinrichtung auf. Das Verfahren umfasst ein Drehen der Fahreinrichtung um die Lenkachse um bis zu 90° quer zu einer Maschinenlängsrichtung, wobei die Fahreinrichtung eine für direkten Bodenkontakt ausgebildete Gleiskette und ein zum Antrieb der Gleiskette ausgebildetes Antriebsrad oder ein Laufrad mit einer für direkten Bodenkontakt ausgebildeten Lauffläche umfasst. Um eine Kollision zwischen den Fahreinrichtungen zu vermeiden, umfasst das Verfahren ferner ein translatorisches Bewegen der Fahreinrichtung gegenüber der Lenkachse. Optional kann die Fahreinrichtung auch über eine Hubeinrichtung mit einer Hubachse am Maschinenrahmen befestigt sein. In diesem Fall kann die translatorische Bewegung auch derart erfolgen, dass die Fahreinrichtung, zusätzlich zur Lenkachse, gegenüber der Hubachse bewegt wird. Es ist dabei unerheblich, in welcher Reihenfolge das Drehen und das translatorische Bewegen der Fahreinrichtung durchgeführt wird. Diese Schritte können auch gleichzeitig erfolgen. Zuletzt erfolgt ein Fahren der Bodenfräsmaschine mit derart gedrehten und bewegten Fahreinrichtungen. Die Fahrrichtung der Bodenfräsmaschine ist dann um bis zu 90° quer zur Maschinenlängsrichtung ausgerichtet. Auf diese Weise erhöht sich die Manövrierbarkeit der Bodenfräsmaschine auf der Baustelle erheblich. Darüber hinaus kann die Bodenfräsmaschine als Ganzes durch diese Stellung der Fahreinrichtungen in einer Richtung parallel zur Rotationsachse der Fräswalze und damit quer zur Längsrichtung der Bodenfräsmaschine fahren und bewegt werden. Ist die Fräswalze hierbei abgesenkt und fräst Bodenmaterial ab beziehungsweise wird die Bodenfräsmaschine stückweise versetzt und die Fräswalze wiederholt zum Abfräsen von Bodenmaterial abgesenkt, kann die Bodenfräsmaschine zum Fräsen eines Grabens, beispielsweise eines Ablaufgrabens beziehungsweise einer sogenannten Regenrinne eingesetzt werden. Auch für das erfindungsgemäße Verfahren ist es grundsätzlich bevorzugt, dass mehrere bis sämtliche Fahreinrichtungen der Bodenfräsmaschine auf diese Weise translatorisch bewegbar sind. Dennoch reicht auch eine einzige Fahreinrichtung aus. Durch die translatorische Bewegung dieser einen Fahreinrichtung kann beispielsweise bereits eine Kollision mit der auf der anderen Maschinenseite gegenüberliegenden Fahreinrichtung vermieden werden. Da die Abstände der Fahreinrichtungen zueinander bei einer Bodenfräsmaschine nicht gleich sein müssen, kann es zum Vermeiden einer Kollision der Fahreinrichtungen untereinander daher bereits ausreichen, wenn eine Fahreinrichtung translatorisch bewegt wird. Beispielsweise können bei einer Bodenfräsmaschine mit insgesamt vier Fahreinrichtungen die hinteren Fahreinrichtungen näher aneinander angeordnet sein als die beiden vorderen Fahreinrichtungen. Wenn der Abstand der beiden vorderen Fahreinrichtungen zum Einschlagen auf bis zu 90° ausreicht, so muss gegebenenfalls nur eine der hinteren Fahreinrichtungen translatorisch bewegt werden, um auch sicherzustellen, dass die hinteren Fahreinrichtungen bei einem derartigen Einschlag ebenfalls nicht kollidieren.

Die Erfindung betrifft ebenfalls ein Verfahren zum Positionieren einer Bodenfräsmaschine, insbesondere einer Straßenfräse oder eines Stabilisierers oder eines Recyclers, für Wartungsarbeiten und/oder zum Transport. Bevorzugt handelt es sich hierbei um eine vorstehend beschriebene, erfindungsgemäße Bodenfräsmaschine. Die Bodenfräsmaschine umfasst bevorzugt zwei vordere und/oder zwei hintere Fahreinrichtungen, die jeweils eine Hubeinrichtung mit einer Hubachse und/oder eine Lenkachse aufweisen. Das Verfahren umfasst ein translatorisches Bewegen der zwei vorderen und/oder der zwei hinteren Fahreinrichtungen gegenüber der jeweiligen Hubachse und/oder Lenkachse und quer zur jeweiligen Hubachse und/oder Lenkachse. Bevorzugt werden dabei die zwei vorderen Fahreinrichtungen in dieselbe Richtung entlang einer Maschinenlängsrichtung bewegt und/oder die zwei hinteren Fahreinrichtungen in dieselbe Richtung entlang einer Maschinenlängsrichtung bewegt. Hierbei werden insbesondere die vorderen Fahreinrichtungen gegenüber den hinteren Fahreinrichtungen in dieselbe oder in eine andere, beispielsweise in die entgegengesetzte, Richtung entlang der Maschinenlängsrichtung bewegt. Das Verfahren umfasst also sowohl das alleinige translatorische Bewegen der vorderen Fahreinrichtungen als auch das alleinige translatorische Bewegen der hinteren Fahreinrichtungen der Bodenfräsmaschine. Darüber hinaus umfasst das Verfahren insbesondere auch das translatorische Bewegen sowohl der vorderen als auch der hinteren Fahreinrichtungen der Bodenfräsmaschine. Werden beispielsweise die vorderen und hinteren Fahreinrichtungen der Bodenfräsmaschine in dieselbe Richtung translatorisch bewegt, so verschiebt sich der Maschinenkörper in Bezug auf seine Aufstandspunkte beziehungsweise Aufstandsfläche. Je nach Bewegungsrichtung verschiebt sich der Maschinenkörper beispielsweise in Maschinenlängsrichtung nach vorne oder nach hinten. Darüber hinaus wäre es allerdings ebenfalls möglich, dass der Maschinenkörper in der einen oder anderen Richtung quer zur Maschinenlängsrichtung verschoben wird. Hierfür müsste dann auch die translatorische Bewegung der Fahreinrichtungen in Maschinenquerrichtung erfolgen. Auf diese Weise lässt sich die Bodenfräsmaschine platzsparend auf einem Transportfahrzeug, beispielsweise einem Tieflader, positionieren. Schließlich können die vorderen und die hinteren Fahreinrichtungen der Bodenfräsmaschine auch in entgegengesetzter Richtung translatorisch bewegt werden. Beispielsweise können die vorderen und die hinteren Fahreinrichtungen entlang der Maschinenlängsrichtung aufeinander zu oder voneinander weg bewegt werden. Werden die Fahreinrichtungen entlang der Maschinenlängsrichtung aufeinander zu bewegt, verkleinert sich die insgesamt von der Bodenfräsmaschine benötigte Aufstandsfläche, was bei beengten Platzverhältnissen, beispielsweise auf einem Tieflader, hilfreich sein kann. Werden die vorderen und die hinteren Fahreinrichtungen dagegen voneinander weg bewegt, so ergibt sich sowohl vor als auch hinter dem Fräswalzenkasten ein größerer Freiraum für Wartungsarbeiten.

Die erfindungsgemäßen Verfahren können auf verschiedene Arten weiterentwickelt werden. Beispielsweise ist es möglich, dass das jeweilige Verfahren selbsttätig von einer Steuereinrichtung durchgeführt wird, insbesondere nach einem von einem Bediener eingegebenen Steuerbefehl. Wie vorstehend bereits beschrieben, steuert die Steuereinrichtung dann die entsprechenden Aktoren an, beispielsweise um einen gewünschten Lenkeinschlag und eine gewünschte translatorische Bewegung der Fahreinrichtungen einzustellen. Hierbei kann beispielsweise auch vorgesehen sein, dass die Steuereinrichtung dem Bediener eine Warnung ausgibt, wenn der gewünschte Ablauf, den der Bediener durch seinen Steuerbefehl eingestellt hat, nicht durchgeführt werden kann. Beispielsweise kann die Steuereinrichtung dazu ausgebildet sein, zu detektieren, wenn der gewünschte Lenkwinkel sich, beispielsweise aufgrund einer Kollision der Fahreinrichtung mit einem Hindernis, nicht einstellen lässt. Darüber hinaus kann die Steuereinrichtung detektieren, wenn sich die gewünschte translatorische Bewegung der Fahreinrichtung nicht durchführen lässt, beispielsweise ebenfalls aufgrund der Kollision mit einem Hindernis. Dies kann beispielsweise über den vorstehend bereits beschriebenen Positionssensor detektiert werden. In diesem Fall gibt die Steuereinrichtung eine Warnung für den Bediener aus. Hierbei kann es sich um einen Hinweis auf der Anzeigeeinrichtung handeln. Darüber hinaus kann die Warnung auch eine Warnleuchte oder eine akustische Warnung, beispielsweise einen Warnton, umfassen.

Es ist bevorzugt, wenn ein Überwachen der Position der Fahreinrichtung gegenüber der Hubachse und/oder der Lenkachse, beispielsweise durch einen Positionssensor und/oder durch wenigsten eine Kamera erfolgt. Darüber hinaus ist ebenfalls ein Anzeigen der Position der Fahreinrichtung gegenüber der Hubachse und/oder der Lenkachse durch die Steuereinrichtung, beispielsweise auf einer Anzeigevorrichtung, bevorzugt. Neben der Anzeige des Kamerabildes auf der Anzeigeeinrichtung, kann die Steuereinrichtung darüber hinaus dazu ausgebildet sein, das Kamerabild auszuwerten und beispielsweise die Position der Fahreinrichtung in Bezug auf die translatorische Bewegung aus den Bilddaten heraus zu erkennen. Beispielsweise kann die Steuereinrichtung dem Bediener dann eine genauere Information, beispielsweise im Sinne eines numerischen Wertes oder eines Piktogrammes, anzeigen.

Darüber hinaus kann die Steuereinrichtung dazu ausgebildet sein, Sicherungsmaßnahmen beim Betrieb der Bodenfräsmaschine mit translatorisch bewegten Fahreinrichtungen zu implementieren. Aufgrund der translatorischen Bewegung der Fahreinrichtungen kann sich beispielsweise die Stand- beziehungsweise Kippsicherheit der Bodenfräsmaschine verändern. Um dem Rechnung zu tragen, ist es bevorzugt vorgesehen, dass ein Beschränken der maximalen Fahrgeschwindigkeit der Bodenfräsmaschine bei translatorisch gegenüber der jeweiligen Hubachse und/oder Lenkachse bewegter Fahreinrichtung erfolgt, insbesondere durch die Steuereinrichtung. Mit anderen Worten kann die Bodenfräsmaschine bei translatorisch bewegten Fahreinrichtungen (wenn sich wenigstens eine Fahreinrichtung also nicht in der Ausgangsposition befindet) nur mit einer gegenüber dem normalen Fahrbetrieb verringerten Fahrgeschwindigkeit bewegt werden. Eine entsprechende Drosselung der Maximalgeschwindigkeit kann von der Steuereinrichtung vorgegeben werden. Alternativ kann die Bodenfräsmaschine zwar mit normaler Fahrgeschwindigkeit bewegt werden, beim Überschreiten eines Schwellenwertes wird dem Bediener allerdings von der Steuereinrichtung eine Warnung ausgegeben beziehungsweise angezeigt. Auf diese Weise kann der Bediener selbst beurteilen, ob in der aktuellen Situation ein Bewegen der Bodenfräsmaschine in der gegebenen Geschwindigkeit trotz translatorisch bewegter Fahreinrichtungen möglich ist oder nicht.

Die Erfindung wird nachstehend anhand der in den Figuren gezeigten Ausführungsbeispiele näher erläutert. Es zeigen schematisch:
- Figur 1:: eine Seitenansicht einer Straßenfräse;
- Figur 2:: eine Seitenansicht eines Stabilisierers/Recyclers;
- Figur 3:: eine Ansicht einer Bodenfräsmaschine von unten mit Fahreinrichtungen in Geradeausstellung;
- Figur 4:: eine Ansicht einer Bodenfräsmaschine von unten mit eingeschlagenen Fahreinrichtungen;
- Figur 5:: eine Ansicht einer Bodenfräsmaschine von unten mit eingeschlagenen, translatorisch bewegten Fahreinrichtungen;
- Figur 6:: eine Ansicht einer Bodenfräsmaschine von unten mit translatorisch bewegten, senkrecht zur Maschinenlängsrichtung eingeschlagenen Fahreinrichtungen;
- Figur 7:: eine perspektivische Ansicht einer Fahrwerkseinheit;
- Figur 8:: eine Seitenansicht einer Fahrwerkseinheit mit einem Laufrad;
- Figur 9:: eine Seitenansicht einer Fahrwerkseinheit mit einem translatorisch bewegten Laufrad;
- Figur 10:: eine Draufsicht auf eine Fahrwerkseinheit;
- Figur 11:: eine Draufsicht auf eine Fahrwerkseinheit mit translatorisch bewegter Fahreinrichtung;
- Figur 12:: eine Draufsicht auf eine weitere Fahrwerkseinheit;
- Figur 13:: eine Draufsicht auf eine weitere Fahrwerkseinheit mit translatorisch bewegter Fahreinrichtung;
- Figur 14:: eine Seitenansicht einer weiteren Fahrwerkseinheit;
- Figur 15:: eine Seitenansicht einer weiteren Fahrwerkseinheit mit translatorisch bewegter Fahreinrichtung;
- Figur 16:: eine Seitenansicht einer weiteren Fahrwerkseinheit mit gegenüber Figur 15 entgegengesetzt translatorisch bewegter Fahreinrichtung;
- Figur 17:: eine Seitenansicht einer auf ein Transportfahrzeug verladenen Bodenfräsmaschine mit translatorisch bewegten Fahreinrichtungen;
- Figur 18:: eine Seitenansicht einer auf ein Transportfahrzeug verladenen Bodenfräsmaschine mit gegenüber Figur 17 entgegengesetzt translatorisch bewegten Fahreinrichtungen;
- Figur 19:: ein Ablaufdiagramm eines Verfahrens zum Fahren einer Bodenfräsmaschine;
- Figur 20:: ein Ablaufdiagramm eines Verfahrens zum Positionieren einer Bodenfräsmaschine für Wartungsarbeiten und/oder zum Transport,
- Figur 21:: eine Ansicht einer Bodenfräsmaschine von unten mit Fahreinrichtungen in Geradeausstellung und schmaler Spurbreite;
- Figur 22:: die Ansicht aus Figur 21 mit Fahreinrichtungen in Geradeausstellung und breiter Spurbreite;
- Figur 23:: eine perspektivische Ansicht einer alternativen Fahrwerkseinheit.

Gleiche beziehungsweise gleich wirkende Bauteile sind in den Figuren mit den gleichen Bezugszeichen beziffert. Sich wiederholende Bauteile sind nicht in jeder Figur gesondert bezeichnet.

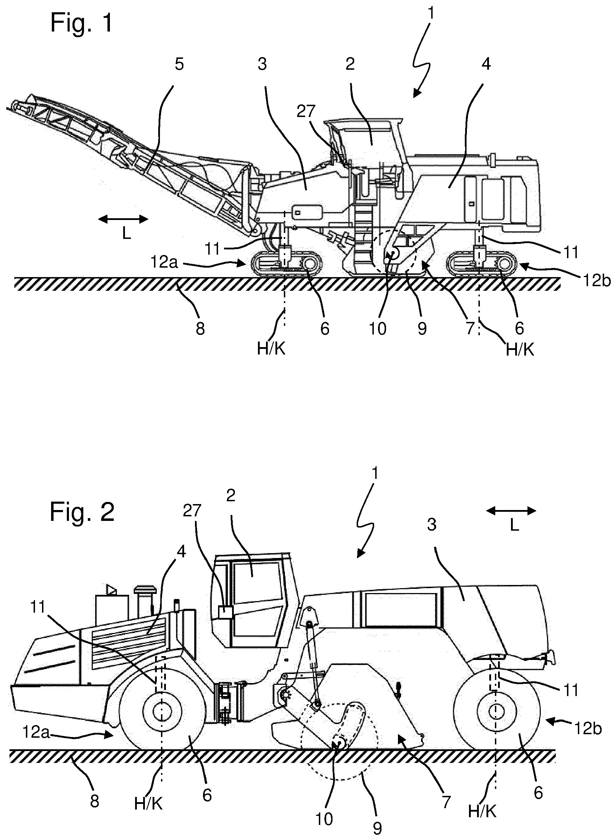

Die Figuren 1 und 2 zeigen jemals Seitenansichten erfindungsgemäßer Bodenfräsmaschinen 1. Konkret zeigt Figur 1 eine Straßenfräse, während Figur 2 einen Recycler/Stabilisierer zeigt. Die Bodenfräsmaschinen 1 aus den Figuren 1 und 2 verfügen bevorzugt über einen Maschinenrahmen 3 mit einem Fahrerstand 2, von dem ein Bediener aus die Bodenfräsmaschine 1 steuern kann, beispielsweise über die Steuereinrichtung 27. Zum Antrieb weisen die Bodenfräsmaschinen 1 bevorzugt einen Antriebsmotor 4 auf, der ein Verbrennungsmotor oder ein Elektromotor sein kann und typischerweise ein Dieselverbrennungsmotor ist. Das Fahrwerk der Bodenfräsmaschinen 1 umfasst bevorzugt Fahrwerkseinheiten 12, genauer in einer Maschinenlängsrichtung L voneinander beabstandete vordere Fahrwerkseinheiten 12a und hintere Fahrwerkseinheiten 12b, die auf dem Bodenuntergrund 8 aufstehen und den Maschinenrahmen 3 tragen. Die Arbeitseinrichtung der Bodenfräsmaschinen 1 ist bevorzugt eine in einem Fräswalzenkasten 7 um eine Rotationsachse 10 rotierbar gelagerte Fräswalze 9. Die Fräswalze 9 ist dabei typischerweise mit Fräswerkzeugen ausgestattet, die bei der Rotation der Fräswalze 9 den Bodenuntergrund 8 abfräsen. Während das abgefräste Material bei der Straßenfräse gemäß Figur 1 bevorzugt über eine Fördereinrichtung 5 auf ein Transportfahrzeug überladen und abtransportiert wird, wird das abgefräste Material bei dem Recycler/Stabilisierer gemäß Figur 2 bevorzugt hinter dem Fräswalzenkasten 7 wieder auf dem Bodenuntergrund 8 abgelegt.

Die Fahrwerkseinheiten 12 umfassen dabei insbesondere Fahreinrichtungen 6, die zum direkten Kontakt mit dem Bodenuntergrund 8 ausgebildet sind, und im gezeigten Beispiel jeweils eine Hubeinrichtung 11, die dazu ausgebildet ist, die Fahreinrichtungen 6 vertikal in ihrer Höhe zu verstellen. Über die Hubeinrichtung 11 ist die jeweilige Fahreinrichtung 6 am Maschinenrahmen 3 befestigt. Wie gezeigt können die Fahreinrichtungen 6 der Straßenfräse gemäß Figur 1 Kettenlaufwerke umfassen, während die Fahreinrichtungen 6 des Stabilisierers/Recyclers gemäß Figur 2 Räder beziehungsweise Laufräder umfassen können. Selbstverständlich könnte allerdings auch die Straßenfräse mit Rädern beziehungsweise Laufrädern und der Stabilisierer/Recycler mit Kettenlaufwerken ausgestattet sein. Die Fahreinrichtungen 6 weisen eine aktuelle Laufrichtung LF auf, die diejenige Richtung bezeichnet, mit denen die jeweilige Fahreinrichtung 6 auf dem Bodenuntergrund abrollt bzw. in die sich die Fahreinrichtung 6 auf dem Bodenuntergrund aufstehend bewegt. Bei der Hubeinrichtung 11 kann es sich beispielsweise um Hubsäulen handeln. Alternativ wäre es auch denkbar, ein Hub-Schwenkgetriebe, beispielsweise unter Verwendung von Parallelogrammlenkern, als Hubeinrichtung 11 einzusetzen. Die Höhenverstellung durch die Hubeinrichtung 11 erfolgt bevorzugt entlang einer Hubachse H, die typischerweise vertikal verläuft. Bei der Hubachse H handelt es sich um eine virtuelle Referenzachse und kein konkretes Bauteil. In den Beispielen gemäß den Figuren liegt die Hubachse H in der Hubeinrichtung 11. Dies muss allerdings nicht zwingend der Fall sein. Wichtig ist lediglich, dass die Hubachse H ortsfest gegenüber der Hubeinrichtung 11 festgelegt beziehungsweise definiert wird. Sie könnte daher auch außerhalb der Hubeinrichtung 11 liegen. In den gezeigten Ausführungsbeispielen gemäß der Figuren 1 und 2 sind die dargestellten Fahreinrichtungen 6 allesamt lenkbar ausgebildet. Sie sind daher um eine Lenkachse K rotierbar ausgebildet, wobei die Lenkachse K bevorzugt parallel zur Hubachse H verläuft. Die Lenkachse K ist also bevorzugt ebenfalls vertikal ausgebildet. Darüber hinaus ist die Lenkachse K in den gezeigten Beispielen koaxial zur Hubachse H. Es ist allerdings wichtig, festzuhalten, dass nicht alle Fahreinrichtungen 6 lenkbar ausgebildet sein müssen, sodass auch nicht jede der Fahreinrichtungen 6 eine Lenkachse K aufweisen muss. Darüber hinaus muss die Lenkachse K auch nicht parallel und/oder koaxial zur Hubachse H verlaufen. Hierbei handelt es sich lediglich um bevorzugte Ausführungsformen.

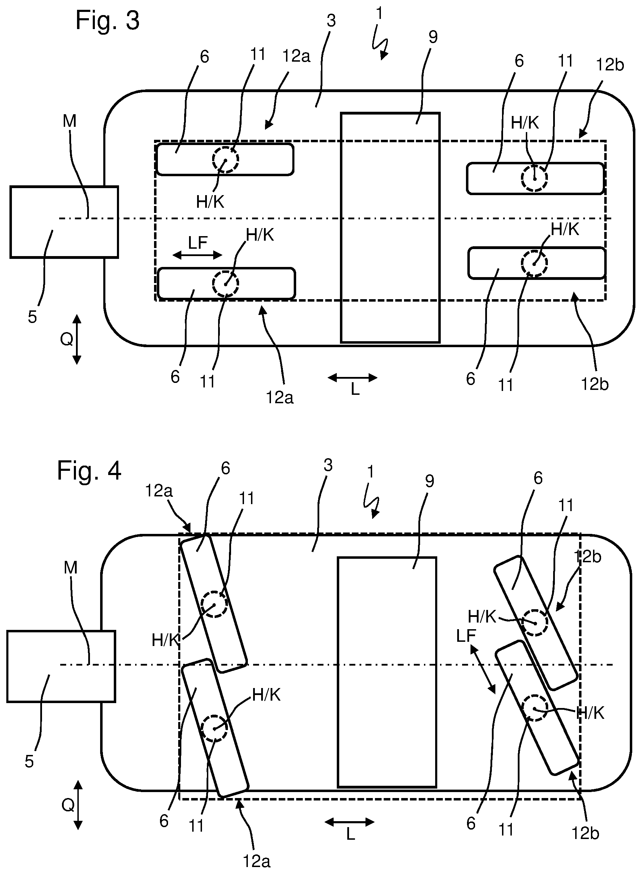

Die Figuren 3-6 zeigen jeweils eine schematische Ansicht von unten auf die Bodenfräsmaschine 1 und verdeutlichen den Anwendungsfall der Erfindung, einen Lenkeinschlag von bis zu 90° zur Maschinenlängsrichtung L zu realisieren. In den Figuren 3-6 ist das in Maschinenlängsrichtung L vordere Ende der Bodenfräsmaschine 1 links und das hintere Ende der Bodenfräsmaschine 1 rechts dargestellt. In Figur 3 befinden sich sämtliche Fahreinrichtungen 6 in Geradeausstellung, also einer Stellung, in der eine Fahrrichtung der Bodenfräsmaschine 1 während eines Fahrantriebs der Fahreinrichtungen 6 im Wesentlichen parallel zur Maschinenlängsrichtung L ist. Wie aus Figur 3 hervorgeht, können die vorderen Fahrwerkseinheiten 12a in Maschinenquerrichtung Q einen unterschiedlichen Abstand zueinander aufweisen als die hinteren Fahrwerkseinheiten 12b. Die Maschinenquerrichtung Q kann dabei bevorzugt senkrecht zu Maschinenlängsrichtung L verlaufen und bezeichnet beispielsweise eine links-/rechts-Richtung der Bodenfräsmaschine 1. Beispielsweise können die vorderen Fahrwerkseinheiten 12a einen größeren Abstand in Maschinenquerrichtung Q voneinander aufweisen als die hinteren Fahrwerkseinheiten 12b. Dies kann typischerweise bei Straßenfräsen der Fall sein. Selbstverständlich kann es auch vorgesehen sein, dass die hinteren Fahrwerkseinheiten 12b einen größeren Abstand in Maschinenquerrichtung Q voneinander aufweisen als die vorderen Fahrwerkseinheiten 12a. Darüber hinaus kann der Abstand der vorderen Fahrwerkseinheiten 12a und der hinteren Fahrwerkseinheiten 12b in Maschinenquerrichtung Q auch gleich sein.

Figur 4 zeigt beispielhaft einen Lenkeinschlag der Fahreinrichtungen 6 nach rechts. Insbesondere zeigt Figur 4 diejenige Lenkstellung, die die Fahreinrichtungen 6 maximal einnehmen können, bevor sie aneinander anstoßen beziehungsweise miteinander kollidieren. Aufgrund der Größe der Fahreinrichtungen 6 ist es typischerweise bei konventionellen Bodenfräsmaschinen 1 nicht möglich, einen größeren Lenkeinschlag einzustellen als in Figur 4 gezeigt. Der maximale Lenkeinschlag der Fahreinrichtungen 6 liegt dabei deutlich unter 90° bezogen auf die Maschinenlängsrichtung L. Es kann daher insbesondere keine Fahrtrichtung der Bodenfräsmaschine 1 senkrecht zu Maschinenlängsrichtung L eingestellt werden. Der Lenkeinschlag nach rechts ist dabei lediglich beispielhaft gewählt. Dasselbe Problem tritt bei einem Lenkeinschlag nach links ein.

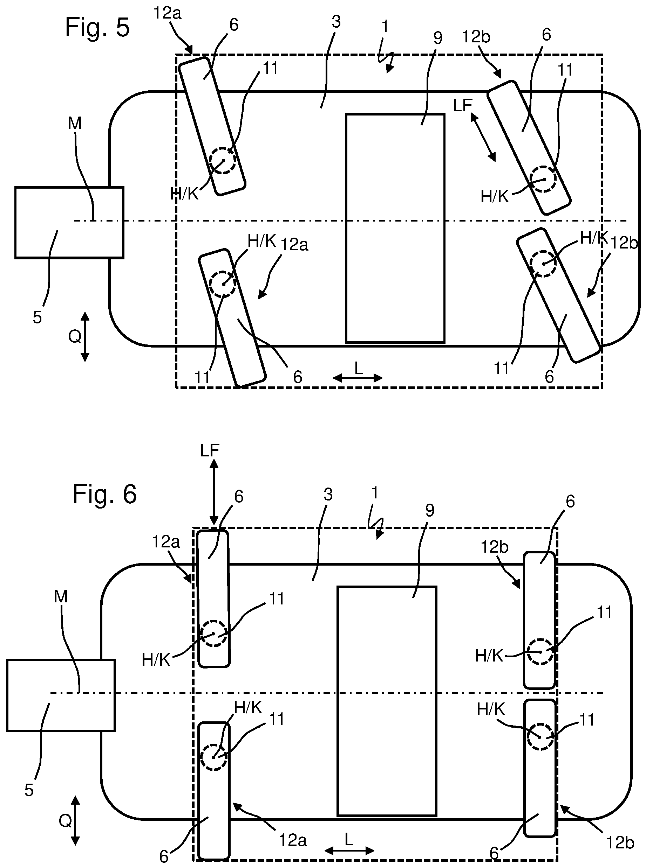

In Figur 5 ist dargestellt, wie die vorliegende Erfindung dieses Problem lösen kann. Im Vergleich zur Situationen in Figur 4 wurden die Fahreinrichtungen 6 insbesondere translatorisch bewegt, und zwar derart, dass sie sich gegenüber der Hubachse H und/oder der Lenkachse K bewegt haben. Die Bewegung gegenüber der Hubachse H und/oder der Lenkachse K erfolgt dabei insbesondere zumindest teilweise quer zu diesen Achsen, beispielsweise zumindest teilweise in einer horizontalen Referenzebene. Die translatorische Bewegung der Fahreinrichtungen 6 erfolgt bevorzugt derart, dass die Fahreinrichtungen 6 bei einem von der Geradeausstellung abweichenden Lenkeinschlag weiter von einer Maschinenlängsmittelebene M entfernt angeordnet sind als vor der translatorischen Bewegung. Die Maschinenlängsmittelebene M ist eine virtuelle Referenzebene, die bevorzugt in Vertikalrichtung und insbesondere parallel zur Maschinenlängsrichtung L verläuft. Darüber hinaus ist die Maschinenlängsmittelebene M bevorzugt in der Mitte der Bodenfräsmaschine 1 in Bezug auf deren Maschinenquerrichtung Q angeordnet. Sie verläuft daher beispielsweise in der Mitte der beiden seitlichen Außenseiten der Bodenfräsmaschine 1, also insbesondere derjenigen Außenseiten, die sich in Maschinenlängsrichtung L erstrecken. Um im Bereich der Maschinenmitte bezogen auf die Maschinenquerrichtung Q nicht aneinander zu stoßen, werden die Fahreinrichtungen 6 daher durch die translatorische Bewegung aus dieser Maschinenmitte heraus verschoben. Mit anderen Worten werden die Fahreinrichtungen 6 durch die translatorische Bewegung von der Maschinenlängsmittelebene M weg bewegt. Es ist dabei unerheblich, ob die translatorische Bewegung der Fahreinrichtungen 6 vor oder nach einem zumindest teilweisen Einstellen des gewünschten Lenkeinschlages erfolgt, solange eine Kollision der Fahreinrichtungen 6 untereinander vermieden wird. Wichtig ist lediglich, dass die Fahreinrichtungen 6 bei einem von der Geradeausstellung abweichenden Lenkeinschlag durch die translatorische Bewegung weiter entfernt von der Maschinenmitte bezogen auf die Maschinenquerrichtung Q beziehungsweise von der Maschinenlängsmittelebene M angeordnet sind. Ebenfalls unerheblich ist dabei, in welche Richtung die Fahreinrichtungen 6 zur Einstellung des Lenkeinschlages gedreht werden. Beispielsweise können die beiden vorderen Fahrwerkseinheiten 12a und/oder die beiden hinteren Fahrwerkseinheiten 12b jeweils in die gleiche Richtung oder in entgegengesetzte Richtungen zur Einstellung des Lenkeinschlages gedreht werden, insbesondere um die Lenkachse K. Es kommt lediglich darauf an, dass die Kollision der Fahreinrichtungen 6 im Bereich der Mitte in Maschinenquerrichtung Q beziehungsweise der Maschinenlängsmittelebene M durch die translatorische Bewegung der Fahreinrichtungen 6 vermieden wird.

In Figur 6 ist dann die Situation dargestellt, in der die Fahreinrichtungen 6 einen Lenkeinschlag von 90° zur Maschinenlängsrichtung L aufweisen. Trotz dieses Lenkeinschlages kommt es zu keiner Kollision der Fahreinrichtungen 6 untereinander. In dieser Situation kann die Bodenfräsmaschine 1 insbesondere senkrecht zur Maschinenlängsrichtung L verfahren werden, also beispielsweise in Maschinenquerrichtung Q, indem die Fahreinrichtungen 6 angetrieben werden.

Die Figuren 3 bis 6 verdeutlichen ferner, dass mit der beschriebenen translatorischen Verstellung der Fahreinrichtungen 6 die Standfläche SF der Bodenfräsmaschine 1 gegenüber reinen Lenkbewegungen erheblich variabler ist. Die Standfläche SF entspricht dabei der Rechteckfläche des Bodenuntergrundes, innerhalb der die Fahreinrichtungen im Kontakt mit dem Bodenuntergrund sind. Das Rechteck verläuft definitionsgemäß mit einem Paar seiner Längskanten parallel zur Längserstreckung bzw. Maschinenmittelebene M. Insbesondere ein Vergleich der Standfläche SF aus Fig. 4 mit maximalem Lenkeinschlag aus der konventionellen Ausgangsposition der Fahreinrichtungen 6 heraus mit der Standfläche SF in Fig. 6, in der die Fahreinrichtungen zur rechten und linken Seite der Bodenfräsmaschine auseinandergeschoben sind, verdeutlicht diesen Effekt.

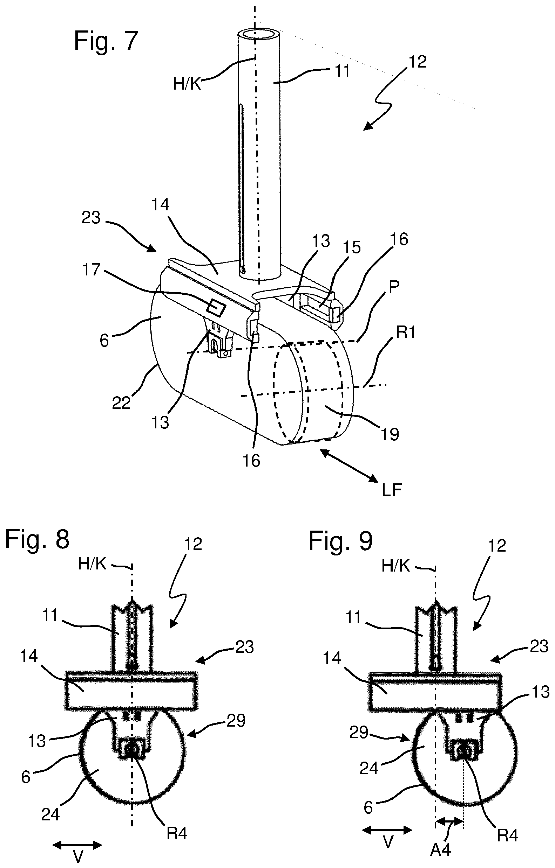

Die Figuren 7 und 8 zeigen beispielhafte Ausführungen der Fahrwerkseinheiten 12 beziehungsweise Fahreinrichtungen 6. Die Fahrwerkseinheit 12 gemäß Figur 7 umfasst beispielsweise eine als Kettenlaufwerk ausgebildete Fahreinrichtung 6, die über eine Lagereinrichtung 23 an einer als Hubsäule ausgebildeten Hubeinrichtung 11 angeordnet sein kann. Die Fahreinrichtung 6 umfasst bevorzugt eine für den direkten Bodenkontakt ausgebildete Gleiskette 22 und insbesondere ebenfalls ein Antriebsrad 19, welches bevorzugt um eine Antriebsradachse R1 rotierbar ausgebildet ist und durch diese Rotation die Gleiskette 22 der Fahreinrichtung 6 antreibt. Die Antriebsradachse R1 ist dabei bevorzugt senkrecht zur Hubachse H und/oder zur Lenkachse K ausgerichtet. Die Lagereinrichtung 23 wiederum umfasst bevorzugt eine Fahrwerkskonsole 14, die beispielsweise an der Hubeinrichtung 11 angeordnet sein kann. Die Fahrwerkskonsole 14 kann eine Führungsschiene 15 aufweisen, über die die Fahrwerkskonsole 14 bevorzugt mit einem Fahrwerksträger 13 verbunden ist. Der Fahrwerksträger 13 ist bevorzugt mit der Fahreinrichtung 6 verbunden und befestigt diese an der Fahrwerkskonsole 14 und damit insgesamt ebenfalls an der Hubeinrichtung 11 beziehungsweise dem Maschinenrahmen 3. Besonders bevorzugt ist die Fahreinrichtung 6 rotier-, pendel- oder kippbar am Fahrwerksträger 13 gelagert, insbesondere um eine Pendelachse P. Die Pendelachse P ist bevorzugt senkrecht zur Hubachse H und/oder zur Lenkachse K und/oder parallel zur Antriebsradachse R1 ausgerichtet. Der Fahrwerksträger 13 ist dabei bevorzugt derart an der Fahrwerkskonsole 14, insbesondere in der Führungsschiene 15, gelagert, dass er zusammen mit der Fahreinrichtung 6 translatorisch gegenüber der Fahrwerkskonsole 14 bewegbar ist, bevorzugt entlang der Führungsschiene 15. Die Lagereinrichtung 23 kann darüber hinaus wenigstens einen oder mehrere Anschläge 16 aufweisen, die insbesondere die translatorische Bewegung des Fahrwerksträgers 13 gegenüber der Fahrwerkskonsole 14 beschränken und dadurch bevorzugt Endpositionen für die translatorische Bewegung definieren. Schließlich kann ein Positionssensor 17 vorgesehen sein, der die aktuelle Relativstellung des Fahrwerksträgers 13 gegenüber der Fahrwerkskonsole 14 und damit insbesondere der Fahreinrichtung 6 gegenüber der Hubachse H und/oder gegenüber der Lenkachse K detektiert.

Die Figuren 8 und 9 zeigen jeweils eine Seitenansicht auf ein Ausführungsbeispiel, bei der die Fahreinrichtung 6 ein Laufrad 24 mit einer zum direkten Bodenkontakt ausgebildeten Lauffläche 29 umfasst. Auch für diese Ausführungsform können grundsätzlich sämtliche hierin beschriebenen Merkmale der Ausführungsform mit Kettenlaufwerk gelten und umgekehrt. Das Laufrad 24 ist bevorzugt um eine Laufradachse R4 rotierbar ausgebildet. Insbesondere wird das Laufrad 24 im Fahrbetrieb der Bodenfräsmaschine 1 um diese Laufradachse R4 rotiert und rollt dabei auf dem Bodenuntergrund 8 ab. Ein Vergleich mit Figur 9 zeigt, wie die Fahreinrichtung 6, hier speziell das Laufrad 24, zusammen mit dem Fahrwerksträger 13 eine translatorische Bewegung durchführt und dabei insbesondere gegenüber der Hubachse H und/oder der Lenkachse K und insbesondere auch gegenüber der Fahrwerkskonsole 14 bewegt wird. Die translatorische Bewegung gemäß einem Vergleich der Figuren 8 und 9 erfolgt entlang einer, insbesondere von der Lagereinrichtung 23, vorgegebenen Verschieberichtung V. Dabei kann die Bewegung ausgehend von der Ausgangsposition in Figur 8 genauso gut in die entgegengesetzte Richtung als in Figur 9 dargestellt entlang der Verschieberichtung V erfolgen. Durch die translatorische Bewegung der Fahreinrichtung 6 ändert sich der Abstand A4 der Laufradachse R4 zur Hubachse H und/oder Lenkachse K. In der Ausgangsposition in Figur 8 ist eine Situation dargestellt, in der die Laufradachse R4 die Hubachse H und/oder die Lenkachse K schneidet und der Abstand A4 der Laufradachse R4 zur Hubachse H und/oder Lenkachse K daher null beträgt. In Figur 9 ist gezeigt, dass der Abstand A4 durch die translatorische Bewegung größer als null ist und sich daher verändert hat. Durch diese Änderung des Abstandes A4 unterscheidet sich die translatorische Bewegung von einer Lenkbewegung, die eine Rotation um die Lenkachse K darstellt. Bei einer derartigen Rotation der Fahreinrichtung 6 um die Lenkachse K ändert sich der Abstand A4 nicht, im Gegensatz zur erfindungsgemäßen translatorischen Bewegung.

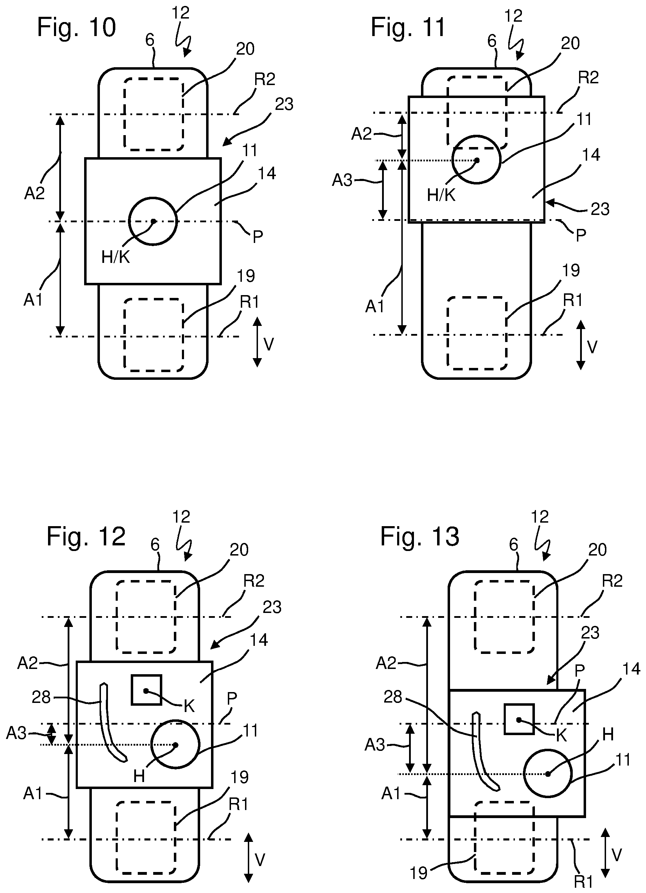

Die Figuren 10 und 11 verdeutlichen dies nochmals für ein Ausführungsbeispiel, bei dem die Fahreinrichtung 6 ein Kettenlaufwerk umfasst. Zusätzlich zum Antriebsrad 19 kann die Fahreinrichtung 6 ebenfalls wenigstens ein Leitrad 20 umfassen, welches um eine Leitradachse R2 rotierbar ausgebildet ist. Typischerweise ist das Leitrad 20 zusammen mit dem Antriebsrad 19 dazu ausgebildet, die Spannung der Gleiskette 22 einzustellen. Die Leitradachse R2 ist dabei bevorzugt parallel zur Antriebsradachse R1 und/oder Pendelachse P beziehungsweise senkrecht zur Hubachse H und/oder Lenkachse K ausgerichtet. Die Figuren 10 und 11 zeigen, dass sich durch eine translatorische Bewegung der Fahreinrichtung 6 in Verschieberichtung V insbesondere der Abstand A1 der Antriebsradachse R1 zur Hubachse H und/oder Lenkachse K und/oder der Abstand A2 der Leitradachse R2 zur Hubachse H und/oder Lenkachse K und/oder der Abstand A3 der Pendelachse P zur Hubachse H und/oder Lenkachse K verändern. Im gezeigten Ausführungsbeispiel und bei einer translatorischen Bewegung der Fahreinrichtung 6 in der gezeigten Richtung entlang der Verschieberichtung V wird der Abstand A1 größer, der Abstand A2 kleiner und der Abstand A3 nimmt einen Betrag größer als null an. Durch diese Änderungen der Abstände A1, A2, A3 unterscheidet sich die translatorische Bewegung der Fahreinrichtung 6 von einer Lenkbewegung durch eine Rotation um die Lenkachse K.

Die Figuren 12 und 13 verdeutlichen ganz allgemein Abweichungen, die grundsätzlich bei sämtlichen Ausführungsbeispielen vorhanden sein können oder nicht. So wird beispielsweise gezeigt, dass die Hubeinrichtung 11 und beispielsweise dadurch auch die Hubachse H nicht zentral an der Fahrwerkskonsole 14 angeordnet sein muss. Die Hubeinrichtung 11 und dadurch auch die Hubachse H können beispielsweise auch exzentrisch versetzt angeordnet sein. Darüber hinaus ist gezeigt, dass die Hubachse H nicht koaxial mit der Lenkachse K verlaufen muss. Wie dargestellt, können die Hubachse H und die Lenkachse K auch voneinander getrennt verlaufen. Dabei können sie weiterhin parallel oder auch schief oder windschief zueinander sein. Wie insbesondere Figur 12 zeigt, muss daher auch der Abstand A3 der Pendelachse P zur Hubachse H in der Ausgangsstellung nicht null sein, sondern kann einen Betrag größer als null aufweisen. Die Abstände A1, A2, A3 sind in den Figuren 12 und 13 zwar weiterhin auf die Hubachse H bezogen, könnten allerdings genauso gut auf die Lenkachse K bezogen sein. Darüber hinaus zeigen die Figuren 12 und 13 eine alternative Ausbildung der Lagereinrichtung 23. Diese umfasst im gezeigten Ausführungsbeispiel keine Führungsschiene 15, sondern eine Führungseinrichtung 28, die beispielsweise als Kulissenführung ausgebildet sein kann. Insbesondere umfasst die Führungseinrichtung 28 ein sich zumindest teilweise in Verschieberichtung V erstreckendes Langloch, in dem beispielsweise ein Kulissenstein beweglich, insbesondere gleitend, gelagert sein kann. Bei der translatorischen Bewegung der Fahreinrichtung 6 wird diese entlang der Führungseinrichtung 23 und insbesondere entlang des Langloches geführt. Hierfür sind das Langloch beispielsweise an der Fahrwerkskonsole 14 und der Kulissenstein am Fahrwerksträger 13 angeordnet oder umgekehrt. Die Führungseinrichtung 28 und insbesondere das Langloch sind dabei zumindest teilweise bogenförmig ausgebildet, so dass die translatorische Bewegung der Fahreinrichtung 6 sowohl in Verschieberichtung V als auch zumindest teilweise quer zur Verschieberichtung V erfolgt. Die translatorische Bewegung muss daher nicht rein linear in eine Richtung erfolgen, sondern kann beispielsweise ebenfalls eine kurvenförmige Trajektorie umfassen. Darüber hinaus kann die translatorische Bewegung beispielsweise ebenfalls von einer Rotation überlagert sein. Wichtig ist lediglich, dass überhaupt eine translatorische Bewegung wie vorstehend bereits beschrieben stattfindet. Wird den Figuren 12 und 13 ebenfalls hervorgeht, ändern sich durch die translatorischen Bewegung entlang der Führungseinrichtung 28 ebenfalls die vorstehend bereits beschriebenen Abstände A1, A2, A3.

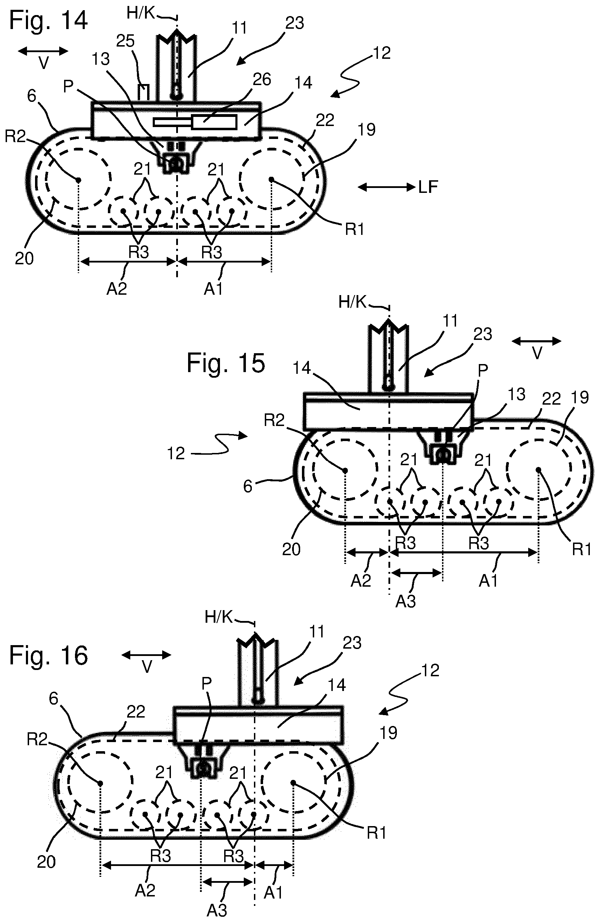

Die entsprechenden Bewegungsabläufe bei einem Ausführungsbeispiel mit einer ein Kettenlaufwerk umfassenden Fahreinrichtung 6 werden ebenfalls nochmals in den Seitenansichten der Figuren 14, 15 und 16 dargestellt. Auch hier sind die Änderungen der Abstände A1, A2, A3 durch die translatorische Bewegung der Fahreinrichtung 6 dargestellt. Darüber hinaus zeigt Figur 14 beispielhaft eine lösbare Feststelleinrichtung 25, die beispielsweise ein Bolzen oder Ähnliches sein kann. Die Feststelleinrichtung 25 ist bevorzugt dazu ausgebildet, die translatorische Bewegung der Fahreinrichtung 6 gegenüber der Hubachse H und/oder der Lenkachse K zu blockieren oder freizugeben. Hierfür ist die Feststelleinrichtung 25 bevorzugt zwischen einer Sperrposition und einer Freigabeposition bewegbar. Die Feststelleinrichtung 25 kann dabei manuell zwischen der Sperrposition und der Freigabeposition verstellbar ausgebildet sein, oder die Feststelleinrichtung 25 wird von einem Aktor, beispielsweise einem von der Steuereinrichtung 27 angesteuerten Aktor, verstellt. Die translatorische Bewegung der Fahreinrichtung 6 kann grundsätzlich durch einen Fahrantrieb der Fahreinrichtung 6 selbst oder mindestens einer anderen Fahreinrichtung 6 der Bodenfräsmaschine 1 angetrieben werden. Alternativ kann ebenfalls eine Antriebseinrichtung 26 vorgesehen sein, die dazu ausgebildet ist, die translatorische Bewegung der Fahreinrichtung 6 anzutreiben. Die Antriebseinrichtung 26 kann dabei beispielsweise als Hydraulikzylinder, insbesondere als doppeltwirkender Hydraulikzylinder, ausgebildet sein, kann allerdings auch andere Aktoren aufweisen.

Wie in den Figuren 14, 15 und 16 dargestellt, kann die Fahreinrichtung 6 zusätzlich zum Antriebsrad 19 und gegebenenfalls zum Leitrad 20 mindestens eine und insbesondere mehrere Laufrollen 21 aufweisen. Die Laufrollen 21 sind insbesondere zur Abstützung der Gleiskette 22 gegenüber dem Bodenuntergrund 8 ausgebildet. Hierzu sind die Laufrollen 21 bevorzugt um jeweils eine Laufrollenachse R3 rotierbar ausgebildet. Die Laufrollenachse R3 ist bevorzugt parallel zur Antriebsradachse R1 und/oder zur Leitradachse R2 und/oder zur Pendelachse P. Sie ist darüber hinaus bevorzugt senkrecht zur Hubachse H und/oder zur Lenkachse K ausgerichtet. Bevorzugt ändert sich auch der Abstand wenigstens einer und insbesondere sämtlicher Laufrollenachsen R3 zur Hubachse H und/oder zur Lenkachse K durch die translatorische Bewegung der Fahreinrichtung 6.

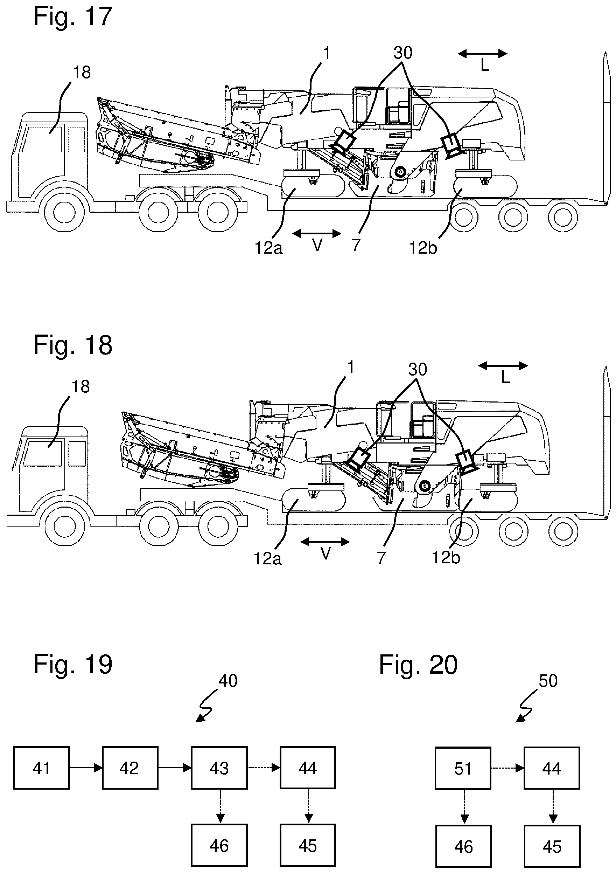

In den Figuren 17 und 18 ist der Anwendungsfall der Erfindung zur Positionierung der Bodenfräsmaschine 1 auf einem Transportfahrzeug 18, beispielsweise einem Tieflader, dargestellt. Insbesondere ist die Bodenfräsmaschine 1 bereits auf der Ladefläche des Transportfahrzeugs 18 angeordnet und soweit auf die Ladefläche gefahren, dass die vorderen Fahrwerkseinheiten 12a an eine Stufe beziehungsweise Schwelle oder ein ähnliches Hindernis auf der Ladefläche des Transportfahrzeugs 18 anstoßen oder zumindest knapp vor diesem anstehen. Die Bodenfräsmaschine 1 kann daher durch einen Fahrantrieb der Fahreinrichtungen 6 nicht weiter auf die Ladefläche des Transportfahrzeugs 18 aufgefahren werden. In den Figuren 17 und 18 sind Situationen gezeigt, in der die Bodenfräsmaschine 1 beziehungsweise der Maschinenkörper beziehungsweise Maschinenrahmen 3 der Bodenfräsmaschine 1 durch eine translatorische Bewegung der Fahreinrichtungen 6 während eines Stillstands der Fahreinrichtungen 6 auf der Ladefläche des Transportfahrzeugs 18 verschoben wurde. Beispielsweise wurde der Maschinenrahmen 3 der Bodenfräsmaschine 1 in Figur 17 in Maschinenlängsrichtung L ganz nach vorne verschoben (entsprechend einer translatorischen Bewegung der Fahreinrichtungen 6 nach hinten entlang der Maschinenlängsrichtung L), wodurch der zur Verfügung stehende Raum direkt hinter der Fahrerkabine des Transportfahrzeugs 18 optimal ausgenutzt wird, während am hinteren Ende der Ladefläche des Transportfahrzeugs zusätzlicher Platz für beispielsweise weitere zu transportierende Gegenstände freigemacht wird. In Figur 18 wurde der Maschinenrahmen 3 der Bodenfräsmaschine 1 beispielsweise in Maschinenlängsrichtung L ganz nach hinten verschoben (entsprechend einer translatorischen Bewegung der Fahreinrichtungen 6 nach vorne entlang der Maschinenlängsrichtung L), wodurch zusätzlicher Raum unmittelbar hinter der Fahrerkabine des Transportfahrzeugs 18 freigemacht und der zur Verfügung stehende Freiraum am hinteren Ende der Ladefläche des Transportfahrzeuges 18 optimal ausgenutzt wird.

Darüber hinaus geht aus den Figuren 17 und 18 ebenfalls hervor, dass durch eine translatorische Bewegung der Fahreinrichtungen 6 zusätzlicher Raum in Maschinenlängsrichtung L vor und/oder hinter dem Fräswalzenkasten 7 zur Verfügung gestellt werden kann. So sind beispielsweise die Fahreinrichtungen 6 der hinteren Fahrwerkseinheiten 12b in Figur 17 derart in Maschinenlängsrichtung L nach hinten verschoben, dass unmittelbar hinter dem Fräswalzenkasten 7 mehr Platz zur Verfügung steht. In Figur 18 sind beispielsweise die Fahreinrichtungen 6 der vorderen Fahrwerkseinheiten 12a derart in Maschinenlängsrichtung L nach vorne verschoben, das unmittelbar vor dem Fräswalzenkasten 7 mehr Platz zur Verfügung steht. Selbstverständlich ist es darüber hinaus ebenfalls möglich, die Fahreinrichtungen 6 der vorderen und der hinteren Fahrwerkseinheiten 12a, 12b so zu verschieben, das gleichzeitig vor und hinter dem Fräswalzenkasten 7 mehr Platz zur Verfügung steht. Dieser Platz kann beispielsweise für Wartungsarbeiten am Fräswalzenkasten 7, an der Fräswalze 9 und/oder an der Fördereinrichtung 5 genutzt werden.

Die Figuren 17 und 18 zeigen darüber hinaus eine optionale Ergänzung oder einen optionalen Ersatz für den Positionssensor 17. Konkret weist die Bodenfräsmaschine 1 bevorzugt Kameras 30 auf, die die Fahreinrichtungen 6 filmen und das entsprechende Bildmaterial insbesondere der Steuereinrichtung 27 zur Verfügung stellen. Aus den Bilddaten der Kameras 30 kann die Position der Fahreinrichtungen 6 gegenüber der Hubachse H und/oder der Lenkachse K bestimmt werden. Dies kann beispielsweise rechnerisch durch die Steuereinrichtung 27 erfolgen, oder durch den Bediener, der die Bilddaten, beispielsweise über die Steuereinrichtung 27 oder eine von dieser umfassten Anzeigevorrichtung, betrachten kann.

In Figur 19 ist ein Ablaufdiagramm eines Verfahrens 40 zum Fahren einer Bodenfräsmaschine 1 in Richtung bis zu 90° quer zu einer Maschinenlängsrichtung L dargestellt. Das Verfahren 40 umfasst bevorzugt ein Drehen 41 der Fahreinrichtungen 6 um bis zu 90° in Bezug zu einer Maschinenlängsrichtung L. Gleichzeitig zu diesem Drehen 41 oder auch vorab erfolgt bevorzugt ein translatorisches Bewegen 42 der Fahreinrichtungen 6 gegenüber der Hubachse H und/oder der Lenkachse K derart, dass eine Kollision der Fahreinrichtungen 6 untereinander beim Einstellen eines Lenkeinschlages von bis zu 90° verhindert wird. Hierfür werden die Fahreinrichtungen 6 bevorzugt derart translatorisch bewegt, dass sie bei einem Lenkeinschlag abweichend von der Geradeausstellung von der Maschinenlängsmittelebene M weg bewegt werden. Mit anderen Worten werden die Fahreinrichtungen 6 bevorzugt translatorisch von der Maschinenmitte nach außen bewegt. Ist das Drehen 41 und das Bewegen 42 der Fahreinrichtungen 6 abgeschlossen, so kann die Bodenfräsmaschine 1 beispielsweise mit einem Lenkeinschlag von bis zu 90° bezogen auf die Maschinenlängsrichtung L verfahren werden. Es erfolgt dann ein Fahren 43 der Bodenfräsmaschine 1 mit entsprechend den vorstehenden Ausführungen gedrehten und bewegten Fahreinrichtungen 6. Die Mobilität der Maschine im Gelände wird dadurch deutlich erhöht.

Schließlich ist in Figur 20 ein Ablaufdiagramm eines Verfahrens 50 zum Positionieren einer Bodenfräsmaschine 1 für Wartungsarbeiten und/oder zum Transport dargestellt. Das Verfahren 50 umfasst bevorzugt ein translatorisches Bewegen 51 jeweils sämtlicher vorderer und/oder hinterer Fahreinrichtungen 6 der Bodenfräsmaschine 1 in dieselbe Richtung. Um beispielsweise für Wartungsarbeiten mehr Platz um den Fräswalzenkasten 7 herum bereitzustellen, können die vorderen Fahreinrichtungen 6 translatorisch entlang der Maschinenlängsrichtung L nach vorne und/oder die hinteren Fahreinrichtungen 6 translatorisch entlang der Maschinenlängsrichtung L nach hinten bewegt werden. Um dagegen bei gegenüber dem Bodenuntergrund 8 oder der Ladefläche eines Transportfahrzeuges 18 stillstehenden Fahreinrichtungen 6 den Maschinenrahmen 3 der Bodenfräsmaschine 1 in Maschinenlängsrichtung L zu verschieben, werden bevorzugt sämtliche Fahreinrichtungen 6 der Bodenfräsmaschine 1 in dieselbe Richtung entlang der Maschinenlängsrichtung L translatorisch bewegt. Bei gegenüber dem Bodenuntergrund 8 oder der Ladefläche eines Transportfahrzeuges 18 stillstehenden Fahreinrichtungen 6 bedeutet diese Bewegung insbesondere, da sie relativ zur Hubachse H und/oder Lenkachse K erfolgt, dass sich der Maschinenrahmen 3 der Bodenfräsmaschine 1 gegenüber den Fahreinrichtungen 6 bewegt.

Die Verfahren 40, 50 können beispielsweise nach einem entsprechenden Steuerbefehl eines Bedieners selbsttätig von der Steuereinrichtung 27 ausgeführt werden. Optional können die Verfahren 40, 50 ebenfalls ein Überwachen 44 der Position der Fahreinrichtung 6 gegenüber der Hubachse H und/oder der Lenkachse K umfassen. Hierfür weist die Bodenfräsmaschine 1 bevorzugt einen Positionssensor 17 oder eine Kamera 30 auf. Die Position der Fahreinrichtung 6 gegenüber der Hubachse H und/oder der Lenkachse K kann darüber hinaus dem Bediener durch ein Anzeigen 45 durch die Steuereinrichtung 27 bekannt gemacht werden. Hierfür kann die Steuereinrichtung 27 beispielsweise mit einer Anzeigeeinrichtung, wie einem Bildschirm oder einem Display, verbunden sein. Die Steuereinrichtung 27 kann darüber hinaus Sicherheitsmaßnahmen ergreifen, um Gefahren im Betrieb der Bodenfräsmaschine 1, insbesondere bei translatorisch bewegten Fahreinrichtungen 6, zu verhindern oder zu verringern. Beispielsweise kann vorgesehen sein, dass ein Beschränken 46 der maximalen Fahrgeschwindigkeit der Bodenfräsmaschine 1 bei translatorisch bewegten Fahreinrichtungen 6, wodurch diese gegenüber der Hubachse H und/oder der Lenkachse K bewegt wurden, erfolgt. Durch die translatorische Bewegung der Fahreinrichtungen 6 kann es dazu kommen, dass die Gewichtskraft der Bodenfräsmaschine 1 nicht mehr optimal auf die Fahreinrichtungen 6 einwirkt und auch von diesen nicht mehr optimal auf dem Bodenuntergrund 8 übertragen werden kann. Aus diesem Grund kann es zur Sicherheit vorteilhaft sein, bei translatorisch bewegten Fahreinrichtungen 6 keine zu schnellen Fahrgeschwindigkeiten zuzulassen.

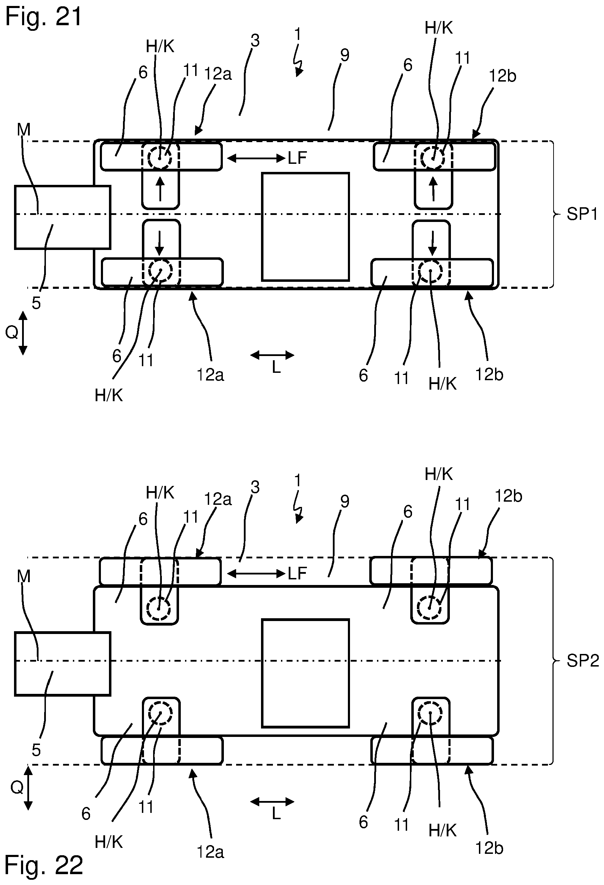

Die Figuren 21, 22 und 23 veranschaulichen einen weiteren alternativen Ansatz zur Umsetzung der Erfindung, der jedoch auch mit den in den vorhergehenden Figuren gezeigten konstruktiven und funktionalen Prinzipien kombinierbar ist. Wesentlich für die in den Figuren 12 bis 23 gezeigten Ausführungsalternativen ist, dass dort mithilfe der bereits beschriebenen translatorischen Verstellung einer oder mehrerer der Fahreinrichtungen 6 die Spurbreite SP der Bodenfräsmaschine variierbar ist. Die Figuren nehmen dabei auf die Beschreibungen und Erläuterungen zu den vorhergehenden Figuren Bezug, so dass nachstehend im Kern auf die bestehenden Unterschiede eingegangen werden wird.

In der Fig. 21 weist die Bodenfräsmaschine eine Spurbreite SP1 auf. Die Spurbreite ist dabei definiert durch den Abstand der Fahrspuren der Fahreinrichtungen 6 quer zur Fahrrichtung der Fahreinrichtungen 6. In der Fig. 22 sind die Fahreinrichtungen 6 dagegen jeweils quer zur aktuellen Fahrrichtung translatorisch relativ zur jeweiligen Hub. und Lenkachse H/K nach außen verstellt. Die in Fahrrichtung gesehen auf der rechten Seite der Bodenfräsmaschine 1 positionierten Fahreinrichtungen 6 sind somit nach rechts versetzt und die auf der linken Seite der Bodenfräsmaschine 1 positionierten Fahreinrichtungen 6 sind nach links versetzt. Der Versatz ist im vorliegenden Ausführungsbeispiel zur jeweiligen Außenseite hin sogar so groß, dass die Fahreinrichtungen 6 bei einer Projektion der Bodenfräsmaschine 1 in eine horizontale Referenzebene außerhalb neben der Bodenfräsmaschine 1 liegen. Dadurch wird die Spurbreite SP der Bodenfräsmaschine 1 von der in der Figur 21 angegebenen Spurbreite SP1 zur Spurbreite SP2 in Fig. 22 vergrößert.

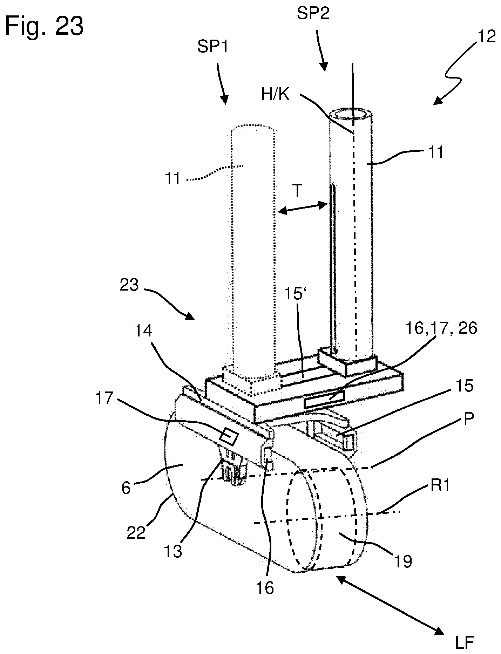

Die Fig. 23 veranschaulicht eine mögliche Ausgestaltung einer Lagerung der Fahreinrichtung 6 an einer Hubeinrichtung 11 in einer perspektivischen Schrägansicht, wobei die Hubsäule 11 mit durchgezogenen Linien in einer der Fig. 22 entsprechenden Position und in gepunkteten Phantomlinien in einer der Fig. 21 entsprechenden Position dargestellt ist. Die Lagereinrichtung 23 ist in diesem Ausführungsbeispiel somit derart ausgebildet, dass die Fahreinrichtung 6 in der Horizontalebene quer zur ihrer Laufrichtung LF relativ zur Lenk- und/oder Hubachse H/K translatorisch verstellbar, insbesondere verschiebbar ist. Dazu kann eine geeignete Führungseinrichtung, wie beispielsweise eine Führungsschiene 15', vorgesehen sein. Es kann für diese Querverstellung in Richtung T auch eine Antriebseinrichtung 26 und/oder ein Positionssensor 17, ein Anschlag 16 etc. vorgesehen sein.

Fig. 23 verdeutlicht, dass auch mehrere der Lagereinrichtungen zwischen der jeweiligen Fahreinrichtung 6 und der jeweiligen Hubsäule 11 funktional in Serie angeordnet sein können und auf diese Weise beispielsweise, wie in der Fig. 23 gezeigt, eine translatorische Verstellung der jeweiligen Fahreinrichtung 6 relativ zur Hubsäule 11 und/oder zur Hub- und/oder Lenkachse H/K in der Horizontalebene in Richtung der Laufrichtung LF und senkrecht hierzu ermöglichen. Hiervon ausgehend ist es auch möglich, translatorische Verstellungen über beide Lagereinrichtungen einander zu überlagern.

Insgesamt wird durch die erfindungsgemäße translatorische Bewegung der Fahreinrichtung 6 beziehungsweise der Fahreinrichtungen 6 die Flexibilität des Einsatzes der Bodenfräsmaschine 1 deutlich erhöht. Insbesondere wird deren Mobilität und Transportfähigkeit verbessert.

## Patentansprüche

1. Bodenfräsmaschine (1), insbesondere Straßenfräse oder Stabilisierer oder Recycler, mit einem Maschinenrahmen (3) und wenigstens einer in einer Maschinenlängsrichtung (L) gesehen vorderen und wenigstens einer in der Maschinenlängsrichtung (L) gesehen hinteren Fahreinrichtung (6),
- wobei jede Fahreinrichtung (6) jeweils ein im Fahrbetrieb der Bodenfräsmaschine (1) mit einem Bodenuntergrund (8) in Kontakt stehendes Laufrad (24) mit einer für den direkten Bodenkontakt ausgebildeten Lauffläche (29) oder eine im Fahrbetrieb der Bodenfräsmaschine (1) mit einem Bodenuntergrund (8) in Kontakt stehende Gleiskette (22) und ein zum Antrieb der Gleiskette (22) ausgebildetes Antriebsrad (19) umfasst,
- wobei wenigstens eine Fahreinrichtung (6) über eine Hubeinrichtung (11) entlang einer Hubachse (H) in der Höhe verstellbar und/oder zur Lenkung der Bodenfräsmaschine (1) um eine Lenkachse (K) rotierbar ausgebildet ist, und
- wobei die wenigstens eine Fahreinrichtung (6) über eine Lagereinrichtung (23) am Maschinenrahmen (3) angeordnet ist,
**dadurch gekennzeichnet,**
**dass** die Lagereinrichtung (23) derart ausgebildet ist, dass die Fahreinrichtung (6) durch eine translatorische Bewegung wenigstens teilweise quer zur Hubachse (H) und/oder Lenkachse (K) bewegbar ist.

2. Bodenfräsmaschine (1) nach Anspruch 1,
**dadurch gekennzeichnet,**
**dass** das Antriebsrad (19) um eine Antriebsradachse (R1) rotierbar ausgebildet ist, oder
**dass** das Laufrad (24) um eine Laufradachse (R4) rotierbar ausgebildet ist, und/oder
**dass** die Lagereinrichtung (23) derart ausgebildet ist, dass die Fahreinrichtung (6) um eine Pendelachse (P) kippbar ist, und
**dass** die Lagereinrichtung (23) derart ausgebildet ist, dass der Abstand (A1, A3, A4) der Antriebsradachse (R1) oder der Laufradachse (R4) und/oder der Pendelachse (P) gegenüber der Hubachse (H) und/oder der Lenkachse (K) verstellbar ist.

3. Bodenfräsmaschine (1) nach dem vorhergehenden Anspruch,
**dadurch gekennzeichnet,**
**dass** die Fahreinrichtung (6) zusätzlich zur Gleiskette (22) und zum Antriebsrad (19) wenigstens ein Leitrad (20) und insbesondere wenigstens eine Laufrolle (21) umfasst, wobei das Leitrad (20) um eine Leitradachse (R2) und die Laufrolle (21) insbesondere um eine Laufrollenachse (R3) rotierbar ausgebildet sind, und dass die Lagereinrichtung (23) derart ausgebildet ist, dass der Abstand (A2) der Leitradachse (R2) und insbesondere auch der Laufrollenachse (R3) gegenüber der Hubachse (H) und/oder der Lenkachse (K) verstellbar ist.

4. Bodenfräsmaschine (1) nach einem der vorhergehenden Ansprüche,
**dadurch gekennzeichnet,**
**dass** die Lagereinrichtung (23) eine an der Hubeinrichtung (11) oder dem Maschinenrahmen (3) befestigte Fahrwerkskonsole (14) und einen an der Fahreinrichtung (6) befestigten Fahrwerksträger (13) aufweist, wobei die Fahrwerkskonsole (14) und der Fahrwerksträger (13) derart beweglich aneinander gelagert sind, dass sie gegeneinander translatorisch, insbesondere linear, verstellbar sind.

5. Bodenfräsmaschine (1) nach dem vorhergehenden Anspruch,
**dadurch gekennzeichnet,**
**dass** die Lagereinrichtung (23) eine Führungsschiene (15) umfasst, wobei die Fahrwerkskonsole (14) und der Fahrwerksträger (13) formschlüssig zueinander über die Führungsschiene (15) verbunden sind, und wobei die Fahrwerkskonsole (14) und der Fahrwerksträger (13) entlang der Führungsschiene (15) relativ zueinander bewegbar sind.

6. Bodenfräsmaschine (1) nach einem der vorhergehenden Ansprüche,
**dadurch gekennzeichnet,**
**dass** die Lagereinrichtung (23) eine Feststelleinrichtung (25) umfasst, wobei die Feststelleinrichtung (25) zwischen einer Sperrposition und einer Freigabeposition verstellbar ist, und dass die Feststelleinrichtung (25) in der Sperrposition eine translatorische Bewegung der Fahreinrichtung (6) gegenüber der Hubachse (H) und/oder der Lenkachse (K) verhindert und in der Freigabeposition freigibt.

7. Bodenfräsmaschine (1) nach einem der vorhergehenden Ansprüche,
**dadurch gekennzeichnet,**
**dass** die Lagereinrichtung (23) eine Antriebseinrichtung (26), insbesondere einen Hydraulikzylinder, umfasst, die die translatorische Bewegung der Fahreinrichtung (6) gegenüber der Hubachse (H) und/oder der Lenkachse (K) antreibt.

8. Bodenfräsmaschine (1) nach einem der vorhergehenden Ansprüche,
**dadurch gekennzeichnet,**
**dass** die Lagereinrichtung (23) wenigstens einen Anschlag (16) umfasst, der eine Endposition für die translatorische Bewegung der Fahreinrichtung (6) gegenüber der Hubachse (H) und/oder der Lenkachse (K) vorgibt, wobei bevorzugt wenigstens zwei Anschläge (16) vorhanden sind, die an der Lagereinrichtung (23) zwei einander gegenüberliegende Endpositionen vorgeben.

9. Bodenfräsmaschine (1) nach einem der vorhergehenden Ansprüche,
**dadurch gekennzeichnet,**
**dass** ein Positionssensor (17) und/oder eine Kamera (30) vorgesehen ist, der und/oder die eine Position der Fahreinrichtung (6) gegenüber der Hubachse (H) und/oder gegenüber der Lenkachse (K) und/oder gegenüber der Lagereinrichtung (23) bestimmt und diese insbesondere an eine Steuereinrichtung (27) weiterleitet.

10. Bodenfräsmaschine (1) nach einem der vorhergehenden Ansprüche,
**dadurch gekennzeichnet,**
**dass** zwei vordere und/oder zwei hintere Fahreinrichtungen (6) vorhanden sind, wobei die beiden vorderen und/oder die beiden hinteren Fahreinrichtungen (6) jeweils eine Hubeinrichtung (11) mit einer Hubachse (H) und/oder eine Lenkachse (K) sowie eine Lagereinrichtung (23) umfassen, wobei die Lagereinrichtung (23) derart ausgebildet ist, dass die jeweilige Fahreinrichtung (6) durch eine translatorische Bewegung gegenüber der jeweiligen Hubachse (H) und/oder Lenkachse (K) bewegbar ist.

11. Verfahren (40) zum Fahren einer Bodenfräsmaschine (1), insbesondere Straßenfräse oder Stabilisierer oder Recycler, bevorzugt gemäß einem der vorhergehenden Ansprüche, in Richtung bis zu 90° quer zu einer Maschinenlängsrichtung (L), wobei die Bodenfräsmaschine (1) wenigstens eine um eine Lenkachse (K) drehbar am Maschinenrahmen (3) gelagerte Fahreinrichtung (6) aufweist, umfassend die Schritte:
a) Drehen (41) der Fahreinrichtung (6) um die Lenkachse (K) um bis zu 90° quer zu einer Maschinenlängsrichtung (L), wobei die Fahreinrichtung (6) eine für direkten Bodenkontakt ausgebildete Gleiskette (22) und ein zum Antrieb der Gleiskette (22) ausgebildetes Antriebsrad (19) oder ein Laufrad (24) mit einer für direkten Bodenkontakt ausgebildeten Lauffläche (29) umfasst;
b) translatorisches Bewegen (42) der Fahreinrichtung (6) gegenüber der Lenkachse (K);
c) Fahren (43) der Bodenfräsmaschine (1) mit derart gedrehten und bewegten Fahreinrichtungen (6).

12. Verfahren (50) zum Positionieren einer Bodenfräsmaschine (1), insbesondere Straßenfräse oder Stabilisierer oder Recycler, bevorzugt gemäß einem der vorhergehenden Ansprüche 1 bis 10, für Wartungsarbeiten und/oder zum Transport,
wobei die Bodenfräsmaschine (1) zwei vordere und/oder zwei hintere Fahreinrichtungen (6) umfasst, die jeweils eine Hubeinrichtung (11) mit einer Hubachse (H) und/oder eine Lenkachse (K) umfassen,
umfassend ein translatorisches Bewegen (51) der zwei vorderen und/oder der zwei hinteren Fahreinrichtungen (6) gegenüber der jeweiligen Hubachse (H) und/oder Lenkachse (K) und quer zur jeweiligen Hubachse (H) und/oder Lenkachse (K),
wobei die zwei vorderen Fahreinrichtungen (6) in dieselbe Richtung entlang einer Maschinenlängsrichtung (L) bewegt werden und/oder wobei die zwei hinteren Fahreinrichtungen (6) in dieselbe Richtung entlang einer Maschinenlängsrichtung (L) bewegt werden, und
wobei insbesondere die vorderen Fahreinrichtungen (6) gegenüber den hinteren Fahreinrichtungen (6) in dieselbe oder eine andere, beispielsweise entgegengesetzte, Richtung entlang der Maschinenlängsrichtung (L) bewegt werden.

13. Verfahren (40, 50) gemäß einem der Ansprüche 11 oder 12,
**dadurch gekennzeichnet,**
**dass** wenigstens eines der folgenden Merkmale umfasst ist:
- das Verfahren (40, 50) wird selbsttätig von einer Steuereinrichtung (27) durchgeführt, insbesondere nach einem von einem Bediener eingegebenen Steuerbefehl;
- es erfolgt ein Überwachen (44) der Position der Fahreinrichtung (6) gegenüber der Hubachse (H) und/oder der Lenkachse (K), durch einen Positionssensor (17) und/oder durch wenigstens eine Kamera (30);
- es erfolgt ein Anzeigen (45) der Position der Fahreinrichtung (6) gegenüber der Hubachse (H) und/oder der Lenkachse (K) durch die Steuereinrichtung (27);
- es erfolgt ein Beschränken (46) der maximalen Fahrgeschwindigkeit der Bodenfräsmaschine (1) bei translatorisch gegenüber der jeweiligen Hubachse (H) und/oder Lenkachse (K) bewegter Fahreinrichtung (6), insbesondere durch die Steuereinrichtung (27).

## Claims

1. A ground milling machine (1), in particular a road milling machine or stabilizer or recycler, having a machine frame (3) and at least one front travel unit (6) as viewed in a longitudinal machine direction (L) and at least one rear travel unit (6) as viewed in the longitudinal machine direction (L),
- each travel unit (6) comprising a respective travel wheel (24), which is in contact with an underlying ground (8) during travel operation of the ground milling machine (1) and has a wheel tread (29) configured for direct ground contact, or a crawler track (22), which is in contact with an underlying ground (8) during travel operation of the ground milling machine (1), and a drive wheel (19) configured for driving the crawler track (22),
- at least one travel unit (6) being height-adjustable along a lifting axis (H) via a lifting device (11) and/or being rotatable about a steering axis (K) for steering the ground milling machine (1), and
- the at least one travel unit (6) being arranged on the machine frame (3) via a mounting device (23),
**characterized in that**
the mounting device (23) is configured such that the travel unit (6) can be moved at least partially transversely to the lifting axis (H) and/or steering axis (K) through a translational movement.

2. The ground milling machine (1) according to claim 1,
**characterized in that**
the drive wheel (19) is rotatable about a drive wheel axis (R1), or
the travel wheel (24) is rotatable about a travel wheel axis (R4), and/or
the mounting device (23) is configured such that the travel unit (6) can be tilted about a swing axis (P), and
the mounting device (23) is configured such that the distance (A1, A3, A4) between the drive wheel axis (R1) or the travel wheel axis (R4) and/or the swing axis (P) can be adjusted relative to the lifting axis (H) and/or the steering axis (K).

3. The ground milling machine (1) according to the preceding claim,
**characterized in that**
the travel unit (6) comprises, in addition to the crawler track (22) and the drive wheel (19), at least one guide wheel (20) and, in particular, at least one track roller (21), the guide wheel (20) being rotatable about a guide wheel axis (R2) and the track roller (21) being rotatable, in particular, about a track roller axis (R3), and **in that** the mounting device (23) is configured such that the distance (A2) of the guide wheel axis (R2) and in particular also of the track roller axis (R3) can be adjusted relative to the lifting axis (H) and/or the steering axis (K).

4. The ground milling machine (1) according to any one of the preceding claims,
**characterized in that**
the mounting device (23) has a track bracket (14) attached to the lifting device (11) or the machine frame (3) and a track support (13) attached to the travel unit (6), the track bracket (14) and the track support (13) being mounted movably on one another such that they are translationally, in particular linearly, adjustable relative to one another.

5. The ground milling machine (1) according to the preceding claim,
**characterized in that**
the mounting device (23) comprises a guide rail (15), wherein the track bracket (14) and the track support (13) are positively connected to each other via the guide rail (15), wherein the track bracket (14) and the track support (13) are movable relative to each other along the guide rail (15).

6. The ground milling machine (1) according to any one of the preceding claims,
**characterized in that**
the mounting device (23) comprises a locking device (25), the locking device (25) being adjustable between a locking position and a release position, and **in that** the locking device (25) prevents a translational movement of the travel unit (6) relative to the lifting axis (H) and/or the steering axis (K) in the locking position and allows said translational movement in the release position.

7. The ground milling machine (1) according to any one of the preceding claims,
**characterized in that**
the mounting device (23) comprises a drive device (26), in particular a hydraulic cylinder, which drives the translational movement of the travel unit (6) relative to the lifting axis (H) and/or the steering axis (K).

8. The ground milling machine (1) according to any one of the preceding claims,
**characterized in that**
the mounting device (23) comprises at least one stop (16) which specifies an end position for the translational movement of the travel unit (6) relative to the lifting axis (H) and/or the steering axis (K), wherein preferably at least two stops (16) are provided which specify two mutually opposite end positions on the mounting device (23).

9. The ground milling machine (1) according to any one of the preceding claims,
**characterized in that**
a position sensor (17) and/or a camera (30) is provided, which determines a position of the travel unit (6) relative to the lifting axis (H) and/or relative to the steering axis (K) and/or relative to the mounting device (23) and forwards it in particular to a control device (27).

10. The ground milling machine (1) according to any one of the preceding claims,
**characterized in that**
two front and/or two rear travel units (6) are provided, the two front and/or the two rear travel units (6) each comprising a lifting device (11) with a lifting axis (H) and/or a steering axis (K) and a mounting device (23), the mounting device (23) being configured such that the respective travel unit (6) can be moved relative to the respective lifting axis (H) and/or steering axis (K) through a translational movement.

11. A method (40) for moving a ground milling machine (1), in particular a road milling machine or stabilizer or recycler, preferably according to any one of the preceding claims, in a direction up to 90° transverse to a longitudinal machine direction (L), the ground milling machine (1) having at least one travel unit (6) mounted on the machine frame (3) for rotation about a steering axis (K), the method comprising the steps of:
a) rotating (41) the travel unit (6) about the steering axis (K) by up to 90° transversely to a longitudinal machine direction (L), the travel unit (6) comprising a crawler track (22) configured for direct ground contact and a drive wheel (19) configured to drive the crawler track (22) or a travel wheel (24) with a wheel tread (29) configured for direct ground contact;
b) translationally moving (42) the travel unit (6) relative to the steering axis (K);
c) moving (43) the ground milling machine (1) with such rotated and moved travel units (6).

12. A method (50) for positioning a ground milling machine (1), in particular a road milling machine or stabilizer or recycler, preferably according to any one of the preceding claims 1 to 10, for maintenance works and/or transport,
the ground milling machine (1) comprising two front and/or two rear travel units (6), each comprising a lifting device (11) with a lifting axis (H) and/or a steering axis (K),
comprising translationally moving (51) the two front and/or the two rear travel units (6) relative to the respective lifting axis (H) and/or steering axis (K) and transversely to the respective lifting axis (H) and/or steering axis (K),
wherein the two front travel units (6) are moved in a same direction along a longitudinal machine direction (L) and/or wherein the two rear travel units (6) are moved in a same direction along a longitudinal machine direction (L); and
wherein in particular the front travel units (6) are moved relative to the rear travel units (6) in a same or another, for example opposite, direction along the longitudinal machine direction (L).

13. The method (40, 50) according to any one of claims 11 or 12,
**characterized in that**
at least one of the following features is comprised:
- the method (40, 50) is carried out automatically by a control device (27), in particular upon a control command entered by an operator;
- monitoring (44) of the position of the travel unit (6) relative to the lifting axis (H) and/or the steering axis (K) is performed by a position sensor (17) and/or by at least one camera (30);
- displaying (45) of the position of the travel unit (6) relative to the lifting axis (H) and/or the steering axis (K) is performed by the control device (27);
- limiting (46) of the maximum travel speed of the ground milling machine (1) is performed, in particular by the control device (27), in the case of translational movement of the travel unit (6) relative to the respective lifting axis (H) and/or steering axis (K).

## Revendications

1. Machine à fraiser le sol (1), en particulier fraiseuse routière ou stabilisateur ou recycleur, comportant un châssis de machine (3) et au moins un dispositif de déplacement (6) avant, vu dans une direction longitudinale de machine (L), et au moins un dispositif de déplacement arrière, vu dans la direction longitudinale de machine (L),
- dans laquelle chaque dispositif de déplacement (6) comprend respectivement une roue de roulement (24) en contact avec un sol (8) pendant le mode de fonctionnement de déplacement de la machine à fraiser le sol (1) et comportant une surface de roulement (29) conçue pour le contact direct avec le sol, ou une chenille (22) en contact avec un sol (8) pendant le mode de fonctionnement de déplacement de la machine à fraiser le sol (1) et une roue d'entraînement (19) conçue pour entraîner la chenille (22),
- dans laquelle au moins un dispositif de déplacement (6) est conçu de manière à pouvoir être réglé en hauteur le long d'un axe de levage (H) par l'intermédiaire d'un dispositif de levage (11) et/ou à pouvoir tourner autour d'un axe de direction (K) pour diriger la machine à fraiser le sol (1), et
- dans laquelle l'au moins un dispositif de déplacement (6) est disposé sur le châssis de machine (3) par l'intermédiaire d'un dispositif de support (23),
**caractérisée en ce**
**que** le dispositif de support (23) est conçu de telle sorte que le dispositif de déplacement (6) peut être déplacé par un mouvement de translation au moins partiellement transversalement à l'axe de levage (H) et/ou à l'axe de direction (K).

2. Machine à fraiser le sol (1) selon la revendication 1,
**caractérisée en ce**
**que** la roue d'entraînement (19) est conçue de manière à pouvoir tourner autour d'un axe de roue d'entraînement (R1), ou
**en ce que** la roue de roulement (24) est conçue de manière à pouvoir tourner autour d'un axe de roue de roulement (R4), et/ou
**en ce que** le dispositif de support (23) est conçu de telle sorte que le dispositif de déplacement (6) peut basculer autour d'un axe pendulaire (P), et
**en ce que** le dispositif de support (23) est conçu de telle sorte que la distance (A1, A3, A4) de l'axe de roue d'entraînement (R1) ou de l'axe de roue de roulement (R4) et/ou de l'axe pendulaire (P) par rapport à l'axe de levage (H) et/ou à l'axe de direction (K) est réglable.

3. Machine à fraiser le sol (1) selon la revendication précédente,
**caractérisée en ce**
**que** le dispositif de déplacement (6) comprend, en plus de la chenille (22) et de la roue d'entraînement (19), au moins une roue directrice (20) et en particulier au moins un galet de roulement (21), dans laquelle la roue directrice (20) est conçue de manière à pouvoir tourner autour d'un axe de roue directrice (R2) et en particulier le galet de roulement (21) est conçu de manière à pouvoir tourner autour d'un axe de galet de roulement (R3), et en ce que le dispositif de support (23) est conçu de telle sorte que la distance (A2) de l'axe de roue directrice (R2) et en particulier également de l'axe de galet de roulement (R3) par rapport à l'axe de levage (H) et/ou à l'axe de direction (K) est réglable.

4. Machine à fraiser le sol (1) selon l'une des revendications précédentes,
**caractérisée en ce**
**que** le dispositif de support (23) présente une console de mécanisme de déplacement (14) fixée au dispositif de levage (11) ou au châssis de machine (3) et un moyen de maintien de mécanisme de déplacement (13) fixé au dispositif de déplacement (6), dans laquelle la console de mécanisme de déplacement (14) et le moyen de maintien de mécanisme de déplacement (13) sont montés de manière à être mobiles l'un par rapport à l'autre de telle sorte qu'ils peuvent être réglés en translation, en particulier de manière linéaire, l'un par rapport à l'autre.

5. Machine à fraiser le sol (1) selon la revendication précédente,
**caractérisée en ce**
**que** le dispositif de support (23) comprend un rail de guidage (15), dans laquelle la console de mécanisme de roulement (14) et le moyen de maintien de mécanisme de roulement (13) sont reliés l'un à l'autre par complémentarité de forme par l'intermédiaire du rail de guidage (15), et dans laquelle la console de mécanisme de roulement (14) et le moyen de maintien de mécanisme de roulement (13) sont mobiles l'un par rapport à l'autre le long du rail de guidage (15).

6. Machine à fraiser le sol (1) selon l'une des revendications précédentes,
**caractérisée en ce**
**que** le dispositif de support (23) comprend un dispositif de blocage (25), dans laquelle le dispositif de blocage (25) est réglable entre une position de blocage et une position de libération, et **en ce que** le dispositif de blocage (25) empêche, dans la position de blocage, un mouvement de translation du dispositif de déplacement (6) par rapport à l'axe de levage (H) et/ou à l'axe de direction (K) et le libère dans la position de libération.

7. Machine à fraiser le sol (1) selon l'une des revendications précédentes,
**caractérisée en ce**
**que** le dispositif de support (23) comprend un dispositif d'entraînement (26), en particulier un cylindre hydraulique, qui entraîne le mouvement de translation du dispositif de déplacement (6) par rapport à l'axe de levage (H) et/ou à l'axe de direction (K).

8. Machine à fraiser le sol (1) selon l'une des revendications précédentes,
**caractérisée en ce**
**que** le dispositif de support (23) comprend au moins une butée (16) qui définit une position finale pour le mouvement de translation du dispositif de déplacement (6) par rapport à l'axe de levage (H) et/ou à l'axe de direction (K), dans laquelle, de préférence, au moins deux butées (16) sont prévues, lesquelles prédéfinissent deux positions finales opposées l'une à l'autre sur le dispositif de support (23).

9. Machine à fraiser le sol (1) selon l'une des revendications précédentes,
**caractérisée en ce**
**qu**'un capteur de position (17) et/ou une caméra (30) sont prévus, lequel et/ou laquelle déterminent une position du dispositif de déplacement (6) par rapport à l'axe de levage (H) et/ou par rapport à l'axe de direction (K) et/ou par rapport au dispositif de support (23) et la transmettent en particulier à un dispositif de commande (27).

10. Machine à fraiser le sol (1) selon l'une des revendications précédentes,
**caractérisée en ce**
**que** deux dispositifs de déplacement (6) avant et/ou deux dispositifs de déplacement arrière sont prévus, dans laquelle les deux dispositifs de déplacement (6) avant et/ou les deux dispositifs de déplacement arrière comprennent respectivement un dispositif de levage (11) comportant un axe de levage (H) et/ou un axe de direction (K) ainsi qu'un dispositif de support (23), dans laquelle le dispositif de support (23) est conçu de telle sorte que le dispositif de déplacement (6) respectif peut être déplacé par un mouvement de translation par rapport à l'axe de levage (H) et/ou à l'axe de direction (K) respectifs.

11. Procédé (40) pour le déplacement d'une machine à fraiser le sol (1), en particulier d'une fraiseuse de route ou d'un stabilisateur ou d'un recycleur, de préférence selon l'une des revendications précédentes, dans une direction allant jusqu'à 90° transversalement à une direction longitudinale de machine (L), dans lequel la machine à fraiser le sol (1) présente au moins un dispositif de déplacement (6) monté sur le châssis de machine (3) de manière à pouvoir tourner autour d'un axe de direction (K), comprenant les étapes consistant à :
a) faire tourner (41) le dispositif de déplacement (6) autour de l'axe de direction (K) jusqu'à 90° transversalement à une direction longitudinale de machine (L), dans lequel le dispositif de déplacement (6) comprend une chenille (22) conçue pour un contact direct avec le sol et une roue d'entraînement (19) conçue pour entraîner la chenille (22) ou une roue de roulement (24) comportant une surface de roulement (29) conçue pour un contact direct avec le sol ;
b) déplacer en translation (42) le dispositif de déplacement (6) par rapport à l'axe de direction (K) ;
c) déplacer (43) la machine à fraiser le sol (1) avec des dispositifs de déplacement (6) ainsi tournés et déplacés.

12. Procédé (50) pour le positionnement d'une machine à fraiser le sol (1), en particulier d'une fraiseuse de route ou d'un stabilisateur ou d'un recycleur, de préférence selon l'une des revendications précédentes 1 à 10, pour des travaux d'entretien et/ou pour le transport,
dans lequel la machine à fraiser le sol (1) comprend deux dispositifs de déplacement (6) avant et/ou deux dispositifs de déplacement arrière qui comprennent respectivement un dispositif de levage (11) comportant un axe de levage (H) et/ou un axe de direction (K),
comprenant un déplacement en translation (51) des deux dispositifs de déplacement (6) avant et/ou des deux dispositifs de déplacement arrière par rapport à l'axe de levage (H) et/ou à l'axe de direction (K) respectifs et transversalement à l'axe de levage (H) et/ou à l'axe de direction (K) respectifs,
dans lequel les deux dispositifs de déplacement (6) avant sont déplacés dans la même direction le long d'une direction longitudinale de machine (L) et/ou dans lequel les deux dispositifs de déplacement (6) arrière sont déplacés dans la même direction le long d'une direction longitudinale de machine (L), et
dans lequel, en particulier, les dispositifs de déplacement (6) avant sont déplacés par rapport aux dispositifs de déplacement (6) arrière dans la même direction ou dans une autre direction, par exemple opposée, le long de la direction longitudinale de machine (L).

13. Procédé (40, 50) selon l'une des revendications 11 ou 12,
**caractérisé en ce qu**'au moins l'une des caractéristiques suivantes est comprise :
- le procédé (40, 50) est exécuté de manière autonome par un dispositif de commande (27), en particulier après une instruction de commande introduite par un opérateur ;
- une surveillance (44) de la position du dispositif de déplacement (6) par rapport à l'axe de levage (H) et/ou à l'axe de direction (K), au moyen d'un capteur de position (17) et/ou au moyen d'au moins une caméra (30), est effectuée ;
- un affichage (45) de la position du dispositif de déplacement (6) par rapport à l'axe de levage (H) et/ou à l'axe de direction (K) au moyen du dispositif de commande (27) est effectué ;
- une limitation (46) de la vitesse de déplacement maximale de la machine à fraiser le sol (1) est effectuée lorsque le dispositif de déplacement (6) est déplacé en translation par rapport à l'axe de levage (H) et/ou à l'axe de direction (K) respectifs, en particulier au moyen du dispositif de commande (27).
